(19) Europäisches Patentamt

European Patent Office

Office européen des brevets

(11) **EP 2 345 984 B1**

(12) **EUROPEAN PATENT SPECIFICATION**

(45) Date of publication and mention of the grant of the patent:
**14.03.2012 Bulletin 2012/11**

(51) Int Cl.:
**G06N 3/04** (2006.01)  **G06N 3/08** (2006.01)

(21) Application number: **10151057.6**

(22) Date of filing: **19.01.2010**

(54) **Online learning of grounded categories using adaptive feature spaces**

Online-Lernen von gegründeten Kategorien mithilfe adaptiver Merkmalsräume

Apprentissage en ligne de catégories fondées utilisant des espaces de charactéristiques adaptifs

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.07.2011 Bulletin 2011/29**

(73) Proprietor: **Honda Research Institute Europe GmbH**
**63073 Offenbach/Main (DE)**

(72) Inventor: **Gläser, Claudius**
**63538 Grosskrotzenburg (DE)**

(74) Representative: **Rupp, Christian**
**Mitscherlich & Partner**
**Patent- und Rechtsanwälte**
**Sonnenstrasse 33**
**80331 München (DE)**

(56) References cited:
**EP-A1- 2 048 603    US-A1- 2008 162 385**

• **STEPHAN KIRSTEIN ET AL: "An Integrated System for Incremental Learning of Multiple Visual Categories" 25 November 2008 (2008-11-25), ADVANCES IN NEURO-INFORMATION PROCESSING, SPRINGER BERLIN HEIDELBERG, BERLIN, HEIDELBERG, PAGE(S) 813 - 820 , XP019121653 ISBN: 9783642024894 * the whole document ***

• **STEPHAN KIRSTEIN ET AL: "A Vector Quantization Approach for Life-Long Learning of Categories" 25 November 2008 (2008-11-25), ADVANCES IN NEURO-INFORMATION PROCESSING, SPRINGER BERLIN HEIDELBERG, BERLIN, HEIDELBERG, PAGE(S) 805 - 812 , XP019121652 ISBN: 9783642024894 * the whole document ***

• **Schaal, S., Atkeson, C. G.: "Constructive Incremental Learning FromOnly Local Information" Neural Computation, [Online] vol. 10, no. 8, 15 November 1998 (1998-11-15), pages 2047-2084, XP002584203 DOI: 10.1162/089976698300016963 Retrieved from the Internet: URL:http://users.isr.ist.utl.pt/~alex/mscp roposals/ ADAPT0708/SchaalNeuralComp1998-RF WR.pdf> [retrieved on 2010-05-26]**

• **Masa-aki Sato,Shin Ishii: "On-line EM Algorithm for the Normalized Gaussian Network"[Online] 1999, pages 1-24, XP002584204 DOI: 10.1.1.37.3704 Retrieved from the Internet: URL: http://citeseerx.ist.psu.edu/viewdoc/d ownload;jsessionid=839E28B2EE5FCF13B88254E 5763CBEBC? doi=10.1.1.37.3704&rep=rep1&type =pdf> [retrieved on 2010-05-26]**

**Description**

The invention relates to a method and system for simultaneous learning of categories and category-discriminative feature spaces in an online, incremental fashion.

The invention can for example be used to interactively teach a robot to learn visual descriptions of objects, to acquire the meaning of words, or to learn detectors for entities important for the robot (e.g., faces or humans). Furthermore, the invention can be used by a robot to categorize auditory and/or visual events (e.g., speech vs. non-speech) or to learn important robot joint configurations (e.g., the hand state for a successful grasping). Additionally, the invention can be used in the domain of industrial process monitoring where the state of an industrial machine or a whole production process can be categorized (e.g., "ok", "near to failure", or "error").

Further, the invention can also be applied in various other domains, one of them being robotics but as well applied in systems for ground, water and/or air bound vehicles, including systems designed to assist a human operator. The method and/or system disclosed herein in general may be used whenever a technical (e.g., an electronic) system is required to autonomously learn characteristics and/or properties of objects (e.g., size, distance, relative/absolute position also to other objects, spatial alignment, relative movement, speed and/or direction and other related object features or feature patterns) which are presented to the system.

In order to process the obtained real-world information (observations), the invention applies neural networks, which can generally be used to infer functions from observations. Neural networks allow working with none or only little a priori knowledge on a problem to be solved and also show a failure tolerant behavior. Problems that may be addressed relate, e.g., to feature identification, control (vehicle control, process control), game-playing and/or decision making, machine vision and/or pattern recognition (facial recognition, object recognition, gesture recognition, speech recognition, (handwritten) character and text recognition), medical diagnosis, financial applications (automated trading systems), data mining (or knowledge discovery) and/or visualization, etc.

A neural network thereby consists of a set of neurons and a set of synapses. The synapses connect neurons and store information in parameters called weights, which are used in transformations performed by the neural network and learning processes.

In particular, the invention applies normalized Gaussian networks (NGnet), which are networks of local linear regression units. Neural networks adhering to a Gaussian network model partition an input space by normalized Gaussians (i.e. Gaussian functions), and each local unit linearly approximates the output within the partition.

Typically, an input signal or input pattern is accepted from a sensor, which is processed using the neural networks implemented by hardware units and software components. An output signal or output pattern is obtained, which may serve as input to other systems for further processing, e.g. for visualization purposes. The input signal may be supplied by one or more sensors, e.g. for visual or acoustic sensing, but also by a software or hardware interface. The output pattern may as well be output through a software or hardware interface or may be transferred to another processing unit or actuator, which may be used to influence the actions or behavior of a robot or vehicle.

Computations and transformations required by the invention and the application of neural networks as well as those necessary for maintaining, adjusting and training the neural network, may be performed by a processing means such as one or more processors (CPUs), signal processing units or other calculation, processing or computational hardware and/or software, which might also be adapted for parallel processing. Processing and computations may be performed on standard off the shelf (OTS) hardware or specially designed hardware components. A CPU of a processor may perform the calculations and may include a main memory (RAM, ROM), a control unit, and an arithmetic logic unit (ALU). It may also address a specialized graphic processor, which may provide dedicated memory and processing capabilities for handling the computations needed.

A neural network is configured such that the application of an input pattern or a set of input patterns produces (either 'direct' or via a relaxation process) a set of (desired) output patterns. Various methods to set strengths/weights of synaptic connections between neurons of the neural network exist. One way, which is not an object of the invention, is to set the weights explicitly, using a priori knowledge. Another way is to 'train' the neural network by feeding it teaching patterns and letting it change its weights (learning) according to some learning rule/algorithm.

Also data storage is usually provided. The data storage is used for storing information and/or data obtained, needed for processing and results as well as data required by the neural network. The stored parameters may be adapted to facilitate leaning. The storage also allows storing or memorizing observations related to events and knowledge deducted therefrom to influence actions and reactions for future events.

The storage may be provided by devices such as a hard disk (HDD), RAM and/or ROM, which may be supplemented by other (portable) storage media such as floppy disks, CD-ROMs, Tapes, etc.. Hence, a program encoding a method according to the invention as well as data acquired, processed, learned or needed in/for the application of the inventive system and/or method may be stored in a respective storage medium.

In particular, the method described by the invention may be provided as a software program product on a (e.g., portable) physical storage medium which may be used to transfer the program product to a processing system or a computing device in order to instruct the system or device to perform a method according to this invention. Furthermore, the method may be directly implemented on a computing device or may be provided in combination with the computing device.

Core techniques in this invention are categorization modules and feature extraction modules. A categorization module incrementally builds a representation of a category given a certain feature space, whereas a feature extraction module provides a feature space (a set of features) in terms of a transformation from a set of basic inputs.

Furthermore, a feature extraction module continuously adapts its output feature space such that it aids the categorization carried out by the categorization modules. In other words, a feature extraction module tries to extract features which best discriminate the categories represented by the categorization modules. Respective training data for learning the transformation carried out by a feature extraction module is generated by the categorization modules. Since feature extraction and categorization are performed simultaneously, the categorization modules have to continuously adapt to the changing feature spaces.

The ability to form and use categories is one of the key factors of human intelligence. Consequently, artificial intelligent systems targeting human-like performance should also provide categorization ability.

Furthermore, it is advantageous to construct adaptive systems which are able to incrementally learn categories during interaction with their environments. This fact poses several constraints on the used methods:

- Firstly, since training exemplars sequentially arise, an online learning process in contrast to batch learning processes (which are usually used in present categorization methods) has to be used.
- Secondly, the system should be able to make use of the formed categories even after the exposure to just a few training exemplars. Consequently, the system cannot collect sufficient statistics to form final categories, it rather has to form gross initial categories and refine them later on according to upcoming training exemplars.
- Thirdly, present categorization systems usually first extract category-discriminative features which are then used by a categorization module. Since (in our case) the system cannot collect sufficient statistics, it initially cannot know which features are important for the present categorization task. Consequently, a continuous feature extraction incorporating sequentially arising training exemplars is feasible. The learning of a feature extractor, thus, has to be done simultaneously to the learning of a categorizer for which the categorizer has to be able to adapt to the continuously changing feature space.
- Lastly, in order to save memory resources it is advantageous not to memorize all training exemplars in order to adapt the feature extractor according to the accumulated knowledge. Rather, the knowledge already represented within the categorization module should be used to adapt the feature extractor.

**Technical background of the invention**

Most present work on the categorization of input patterns rely on statistical learning for both the extraction of features as well as the learning of a categorizer (see, e.g., A.K. Jain et al., "Statistical Pattern Recognition: A Review", IEEE Transactions on Pattern Analysis and Machine Intelligence, 22(1):4-37, 2000 for a review on these methods). They are characterized by a segregation of a batch learning of a feature extractor and a subsequent learning of a categorizer. Consequently, these methods cannot be used in an online experimental setup where training samples sequentially arise.

Only a few methods suitable for incremental, online category learning exist. Examples for these methods are the algorithms belonging to the family of Adaptive Resonance Theory (ART) networks (cf., e.g., G.A. Carpenter and S. Grossberg, "Adaptive Resonance Theory", The Handbook of Brain Theory and Neural Networks, MIT Press, Cambridge, USA, 2003). ART networks incrementally acquire category representations but, in contrast to the invention, operate on a fixed feature space. They, thus, do not extract category-discriminative features which may aid pattern categorization.

An incremental learning approach for categorization which further adapts the feature representation has been proposed (see S. Kirstein et al., "A Vector Quantization Approach for Life-Long Learning of Categories", Advances in Neuro-Information Processing, LNCS 5506, pp. 805-812, Springer Berlin / Heidelberg, 2009). However, this method does not use feature extraction (i.e. it does not generate new feature dimensions as a transformation from a set of basic features) but rather performs feature selection (i.e. it selects informative features out of a set of features). Consequently, the set of predefined features (from which the method can select some) restricts the applicability of such a system to tasks which can be solved using the existing feature set. Therefore, the designer of a system has to provide informative features given its domain knowledge. In contrast, the invention relates to a system which incorporates feature extraction. Consequently, only a small number of features have to be provided to the system, whereas the system generates further features out of existing ones according to task demands.

A system which incrementally learns a feature extractor as well as a categorizer has also been presented (see S. Ozawa et al., "Incremental Learning of Feature Space and Classifier for Face Recognition", Neural Networks, 18 (5-6):575-584, 2005). This system is similar to the invention insofar as a feature extraction module and a categorization module are learned simultaneously, where the categorization module has to continuously adapt to the changed feature space. However, in contrast to the invention the feature extraction is decoupled from the categorization, i.e. it does not make use of the representation employed by the categorization module to extract category-discriminative features. Furthermore, the system makes use of a separate memory for retraining the categorizer on a changed feature space. In contrast, the invention does not make use of such an additional buffer and, thus, saves memory resources particularly for difficult (complex) categorization problems.

It is hence an object of the invention to provide an adaptive method and to construct an adaptive system which is able to incrementally learn categories during interaction the environment and does not show the limitations of the prior art.

The invention shows how the close coupling between a feature extraction module (FEM) and a classification module (CM) leads to improved feature extraction (and therewith also categorization) and saves computational resources. Particularly, the simultaneous training of CM and FEM, the adaptation of a CM to a changing feature space, and the generation of training samples for the FEM by the CM delineate the invention from other methods.

In the document "an integrated system for incremental learning of multiple visual categories" by Kirstein et al. a biologically inspired vision system is described to incrementally learn multiple visual categories by interactively representing several hand-held objects. The overall system is composed of a foreground-background separation part, several feature extraction methods and a life-long learning approach combining incrementally learning with category-specific feature selection.

## Summary of the invention

This object is achieved by a method and a system according to the independent claims. Advantageous embodiments are defined in the dependent claims.

The invention therefore provides a method for categorizing input patterns, comprising receiving from an accepting of means at least one input pattern including sensorial information representing observations, generating at least one feature pattern by transforming the input pattern by application of at least one feature extraction module which learns from the performed generating process, categorizing the feature pattern into a category by application of at least one learnable categorization module which learns from the performed categorization process. The learning of the feature extraction module uses input from at least one categorization module based on which the feature extraction module extracts a feature pattern discriminating the categories obtained by the categorization module, and the generating and categorization process are performed on a processing means. The method further comprises storing a category derived from the categorization process with features of the input pattern, and returning category information for the input pattern by an output means.

The learning of the feature extraction module may include training.

The training of the feature extraction module might use training samples generated by the at least one categorization module.

The training of the feature extraction module can use training samples selected based on information derived from the at least one categorization module.

The feature extraction module and the categorization module may learn incrementally.

The at least one categorization module can be instructed to adapt to a feature space provided by the at least one feature extraction module.

The adaptation of the feature space may be based on analytical determinations.

The feature space can be adapted by retraining the categorization modules.

The learning of a feature extraction module may rely on at least one of a maximization of mutual information, a discriminant analysis, a principle component analysis, and an independent component analysis.

The categorization module can be implemented by an artificial neural network.

The artificial neural network may be a normalized Gaussian network.

The normalized Gaussian network can be an adaptive normalized Gaussian network.

The accepting means for accepting an input pattern may be at least one of a sensor, a hardware interface and a software interface.

The processing means might be a processor and/or a signal processing unit formed of hardware and/or software.

The processing means may be adapted for parallel processing.

The output means is a hardware interface.

In another aspect of the invention, the invention provides a computer system for categorizing input patterns, comprising an accepting means for receiving at least one input pattern including sensorial information representing observations, a processing means employed to generate at least one feature pattern by transforming the input pattern by application of at least one feature extraction module which learns from the performed generating process, the processing means employed to categorize the feature pattern into a category by application of at least one categorization module which learns from the performed categorization process. The learning of the feature extraction module uses input from at least one categorization module such that the feature extraction module extracts a feature pattern discriminating the categories obtained by the categorization module. The system also comprises a storage storing a category derived from the categorization process with features of the input pattern, and an output means for returning category information for the input pattern.

**Brief description of the figures**

**Figure 1**  shows an example for a configuration of the categorization framework. It consists of one FEM transforming input patterns to feature pattern and one CM which in turn categorizes feature patterns.

**Figure 2**  illustrates learning in a categorization framework composed of one FEM and one CM.

**Figure 3**  shows a binary CM. It categorizes a feature pattern to be either a member of a first or a member of a second category, where the first category is the opposite to the second category.

**Figure 4**  shows a multi-category CM. It categorizes a feature pattern to be a member of one of the supported categories. Here, the categories do not necessarily be opposites of each other.

**Figure 5**  shows a categorization framework composed of one FEM and one binary CM.

**Figure 6**  shows a categorization framework composed of one FEM and one multi-category CM.

**Figure 7**  shows a categorization framework composed of one FEM and multiple binary CMs.

**Figure 8**  shows an example categorization framework composed of two FEMs as well as one multi- category and one binary CM. It serves the categorization of input patterns to be either "adult", "child", or "infant" as well as "male" or "female".

**Figure 9**  shows an example for a categorization framework which uses multiple FEMs to form a feature space.

**Figure 10**  illustrates receptive fields (width of the dashed Gaussians) as well as output weights (amplitude of the dashed Gaussians) of 4 local experts. The straight line shows the corresponding output of an NGnet. As can be seen, an NGnet provides excellent inter- and extrapolation capabilities compared to RBF networks, whose output would be 0 in regions which are not covered by the receptive fields of local experts.

**Figure 11**  shows a splitting of a local model. The receptive field of the original model (dashed line) becomes refined and covered by two new models.

**Figure 12**  illustrates the merging of two multivariate Gaussian distributions (dashed lines) with importance weights $\omega_1 = 0.75$ and $\omega_2 = 0.25$ for the algorithms using (a) the Kullback-Leibler divergence and (b) the Jenson-Shannon divergence.

**Figure 13**  shows an NGnet applied to the cross function approximation problem: (a) the cross function, (b) the network's approximation, and (c) the receptive fields of the local experts.

**Figure 14**  sows that the NGnet shown in **Figure 13** served as basis for generating 500 input samples corresponding to $\tilde{c}=0$ and $\tilde{c}=1$, respectively.

**Figure 15**  shows an improved generalization procedure based on the relevance of feature.

**Figure 16**  illustrates a setup of an experiment according to the invention.

**Figure 17**  shows the results of the experiment for learning the meaning of "left to". The evolution of the number of hidden units used by the normalized Gaussian network is depicted in the upper panel, whereas the mean squared error of the categorization is plotted in the bottom panel.

**Terms and definitions**

Category

A category is a collection of entities which share some typical perceptible.

Categorization

Categorization is the process of dividing a set of observations into groups or categories whose members share some typical perceptible. Thereby, an observation may belong to multiple categories.

Classification

Classification is the process of assigning an observation / entity to one and only one of mutually exclusive classes. Thereby, the members of a class fulfill the explicit definition of the class.

Feature

In general a feature is a prominent part or characteristic of an entity or category. Here, the term feature is used to refer to a (multi-dimensional) vector which is obtained via a transformation from a (multi-dimensional) input vector. Since the invention relates to a technique for learning category-discriminative features, after learning the features should reflect the (unique) characteristics of the different categories.

Feature Extraction

Feature extraction is the process of creating new features in terms of transformations from a set of basic features.

Feature Selection

Feature selection is the process of selecting one or more features from a set of basic features.

Grounding

Grounding refers to the process of linking a symbol (e.g. a word) to its meaning. In the context of category learning a category label corresponds to a symbol which becomes linked to the typical perceptible of the category members.

Mutual Information

Mutual information is a quantity that measures how much one random variable tells us about another. It can be thought of as the reduction in uncertainty about one random variable given knowledge of another. High mutual information indicates a large reduction in uncertainty; low mutual information indicates a small reduction; and zero mutual information between two random variables means the variables are independent. For two discrete variables X and Y the mutual information I(X;Y) between them is formally defined as

$$I(X;Y) = \sum_{x,y} P_{XY}(x,y) \log \frac{P_{XY}(x,y)}{P_X(x)P_Y(y)}$$

Here, $P_{xy}(x,y)$ is the joint probability distribution and $P_x(x)$ and $P_y(y)$ are the marginals.

Discriminant Analysis

Discriminant analysis is a collection of methods concerned with the extraction of features which best discriminate different categories. Most prominent methods are Linear Discriminant Analysis or Generalized Linear Discriminant Analysis (for a detailed description of them see C.M. Bishop, "Neural Networks for Pattern Recognition", Oxford University Press, New York, USA, 1995).

Principle Component Analysis

Principal Component Analysis is a method which learns a linear transformation from one space into another, such that the dimensions of the output space are orthogonal and have maximum variance. The main applications of Principle Component Analysis are feature weighting and selection as well as dimensionality reduction (for a detailed description see S. Haykin, "Neural Networks: a comprehensive foundation", 2nd edition, Prentice-Hall, New Jersey, USA, 1999).

Independent Component Analysis

Given a source vector U composed of independent sources [U1, U2, ..., Um]. The linear system X=AU is considered, whose characteristic is defined by the mixing matrix A. Given the observations X the aim of Independent Component Analysis is to find a demixing matrix W with Y=WX such that Y resembles U, i.e. to extract the sources which cannot be observed (for a detailed description see S. Haykin, "Neural Networks: a comprehensive foundation", 2nd edition, Prentice-Hall, New Jersey, USA, 1999).

**Detailed description of the invention**

In the following an example is provided which should illustrate the process of learning categories according to the explanation given above.

Therefore, it should be assumed that a system has to form a category corresponding to the meaning of "left to", which describes a spatial relation between two locations. Furthermore, assume the system has access to the absolute positions of the two locations in some world coordinate system. Obviously, the system initially does not have access to the feature dimension which is relevant for the categorization task, which is the difference of the horizontal components of the absolute positions. Consequently, a classifier may memorize some training samples as prototypes (which are either members or not members of the category "left to"). It may further categorize an unknown situation according to its similarity to already acquired prototypes.

Such a categorizer will obviously require enormous memory resources in case of complex categorization tasks. However, this can be circumvented by abstracting among the acquired prototypes. Even after a few training samples the system may be able to abstract, i.e. to detect the relevant feature dimension. Having the relevant feature dimensions at hand, the complexity of the category representation employed by the categorizer (e.g. the number of memorized prototypes) can be significantly reduced, while classification performance remains the same or even increases due to enhanced generalization ability.

Description of the Categorization Framework

The problem of incremental category learning on adaptive feature spaces is considered. Therefore the invention describes a categorization framework which consists of at least one feature extraction module (FEM) and at least one categorization module (CM). For the following description of the framework x denotes the inputs to the framework, y denotes the features internal to the framework, and c denotes the category labels.

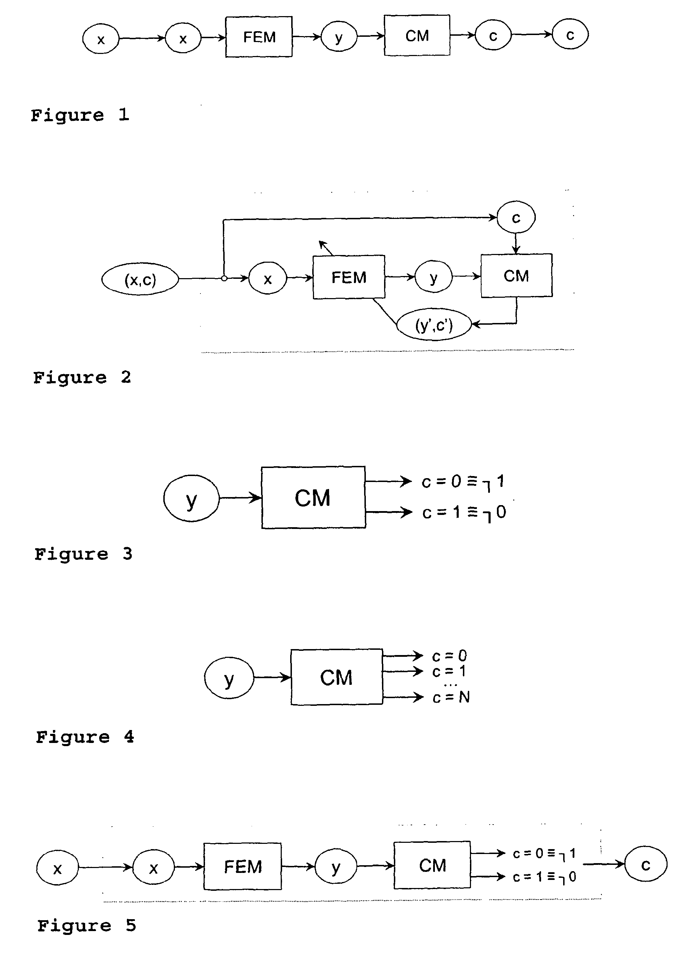

The simplest version of the proposed framework for the categorization of an input pattern is illustrated in Figure 1. It consists of exactly one FEM and one CM. The FEM transforms an input pattern x to a feature pattern y which in turn serves as input to the CM. The CM finally categorizes the feature pattern y and outputs the category label c. **Figure 1** illustrates the use of the categorization framework. However, it does not illustrate how the framework simultaneously learns the FEM and CM. Based on training samples (x,c), which denote a tuple of an input pattern x and its corresponding category label c, the categorization framework can be learned as depicted in **Figure 2**. Firstly, the FEM transforms the input pattern x to a feature pattern y. In principle any type of transformation might be implemented by the FEM. Without prior knowledge, the FEM may initially implement the identity mapping, i.e. y=x. Secondly, the feature pattern y as well as the category label c serve as input to the CM. Based on the tuple (y,c) the CM can be trained in a supervised fashion. Thereby, the exact training technique of course depends on the model chosen to implement the CM. In the invention a generative models for the implementation of CM is considered. Here, a model to be generative is denoted, if it can be used to generate category representatives y' given a category label c'. Based on tuples (y',c') generated by the CM, the FEM can be trained in a supervised fashion. Thereby, the exact training technique of course depends on the method chosen to implement the FEM. Since the training of the FEM results in a change of the feature space produced by the FEM, the CM finally has to adapt to the changed feature space.

In summary, the training of the proposed categorization framework can be done by two processes which can be executed one after the other. However, they even can be executed independently of each other.

A training step for a CM can be summarized as follows:

1. Get a training sample (x,c).
2. Generate a feature pattern y by means of applying the FEMs associated with the CM on the input pattern x.
3. Use the tuple (y,c) to adapt the CM.

A training step for the FEM can be summarized as follows:

1. Let the CMs associated with the FEM generate tuples (y',c') for categories c' represented by the CMs.
2. Use the tuples (y',c') to update the FEM.
3. Adapt the CMs associated with the FEM to the changed feature space.

Next, different possible categorization systems will be considered in terms of their configurations of FEMs and CMs. Therefore, two types of categorization modules will be presented first. The first one is a binary categorizer as depicted in **Figure 3**. Given a feature pattern y it categorizes the pattern to be either c=1 or c=0, where the category label 0 denotes the opposite to the category label 1. This type of categorization module can act as a detector of a certain category. Consider the example of face detection. The category c=1 may correspond to the category of faces, whereas c=0 corresponds to all non-faces. Consequently, if the CM outputs 1, it has detected a face represented by the feature pattern y.

The second type of categorization module performs multi-class categorization as depicted in **Figure 4**. For this type of categorization module, the fact, that one category is the opposite of another category, may not hold. Consider the example of face recognition. Here, the category c=0 may correspond to the face of a certain person, whereas the category c=1 may correspond to the face of another person, and so on.

Given these types of categorization modules, different types of categorization systems can be constructed. The first one is depicted in **Figure 5**. If the face detection example is considered, the CM may generate training tuples (y',c') with c'=1="face" and c'=0="non-face" such that the FEM can be trained to produces features suited to discriminate between faces and non-faces.

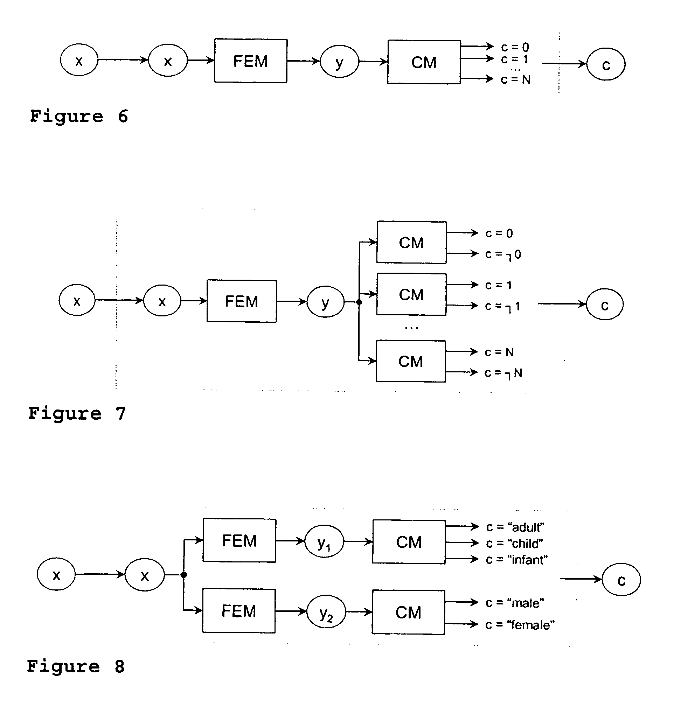

Face recognition (as described previously) can be achieved by the categorization framework depicted in **Figure 6**. The CM can produce training tuples (y',c') with c'=0..N such that the FEM can be trained to produce features suitable for the discrimination between the faces of different persons. However, the same task could be achieved by the use of multiple binary CMs operating on the same feature space (see **Figure 7**). The different CMs may cooperatively produce training tuples (y',c') with c'=0..N, such that similar discriminative features may be learned.

Consequently, it can be summarized that multiple CMs can be linked to a feature space produced by a FEM. The FEM can be trained by training tuples which are generated by CMs linked to the feature space produced by the FEM. Thereby, the training set comprises representatives of all classes or only a subset of classes represented by the CMs.

The suitability of the different configuration schemes are illustrated on the example depicted in **Figure 8**. This example makes use of two FEMs. Thereby, the first FEM produces a feature space y1 suitable for the discrimination between an adult, a child, and an infant. The respective categorization is carried out by the CM linked to y1. The second FEM produces a feature space y2 composed of gender-discriminative features. The respective categorization is carried out by the binary CM linked to y2.

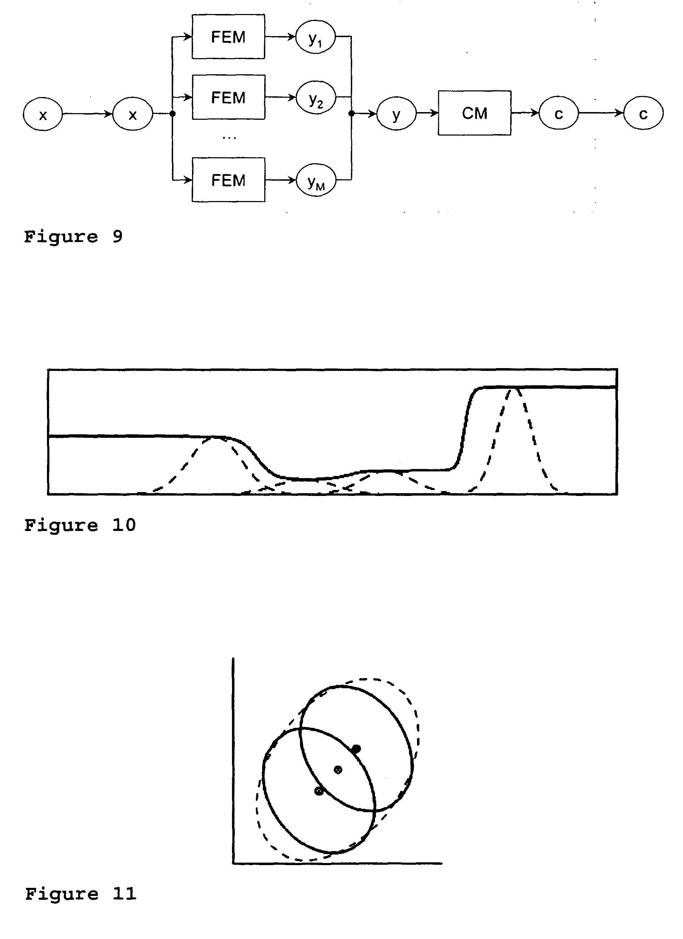

In addition to the linkage of multiple CMs to a feature space produced by one FEM (see **Figure 7**), multiple FEMs may cooperatively produce a feature space which can be used by one or multiple CMs. This type of configuration is depicted in **Figure 9**, where the CM stands for one or multiple categorization modules. In this example, the FEMs produce feature spaces $y_1$, ..., $y_M$ which jointly form the feature space y. The feature space y is finally used by the CM. Consequently, the CM may generate training tuples which are used to train each of the FEMs.

In summary, a categorization framework according to the invention comprises one or more FEMs as well as one or more CMs. The FEMs independently or jointly produce feature spaces by means of a transformation from an input space. On the different feature spaces, one or multiple CMs perform categorization. CMs are able to generate feature patterns as representatives of the categories represented by the CMs. These training samples can in turn be used to train the FEMs which produce the feature spaces the CMs are working on.

Implementation

In this section, an implementation of the proposed categorization framework is suggested. Thereby, a FEM is comprised of two stages:

- Firstly, MRMI (Maximizing Renyi's Mutual Information) (as proposed in K.E. Hild et al., "Feature Extraction Using Information-Theoretic Learning", IEEE Transactions of Pattern Analysis and Machine Intelligence, 28(9):1385-1392, 2006) and,
- Secondly, PCA (Principle Component Analysis). For the CM an adaptive version of the NGnet (normalized Gaussian network) is used (see J. Moody and C. J. Darken, "Fast learning in networks of locally-tuned processing units", Neural Computation, 1(2):281-294, 1989 for an introduction to NGnets).

In the following a detailed description of the implementation is provided. It is outlined how FEMs and CMs can be implemented. Further, details of a possible implementation of the invention are provided, and it is described how FEMs and CMs can be coupled to yield the proposed categorization framework.

Feature Extraction

Maximizing Renyi's Mutual Information (MRMI)

Let $X$ and $C$ be a stochastic input stimulus vector and its associated category label with $x(m)$ and $c(m)$ being random realizations of them. The aim of the feature extraction stage is to find a function $\Phi$ which extracts category-discriminative features $Y = \Phi(X)$. Here, only linear transformations of form $Y = R*X$ are considered. For the evaluation of the feature extraction quality the mutual information can be used. It describes the amount of information the random feature vector $\mathbf{Y}$ carries about the category $C$.

$$I(\mathbf{Y};C) = H(\mathbf{Y}) - H(\mathbf{Y}|C) \tag{1}$$

Thereby, $H(Y)$ and $H(Y|C)$ are the entropy and the differential entropy according to Shannon.
It has been proposed (in K.E. Hild et al., "Feature Extraction using Information-Theoretic Learning", IEEE Transactions on Pattern Analysis and Machine Intelligence, 29(9):1385-1392, 2006) that the feature extraction matrix $\mathbf{R}$ can be learned by maximizing the information-theoretic criterion $I(Y;C)$. Thereby, Shannon's definition of entropy $H(Y)$ can be replaced with Renyi's quadratic entropy $H_2(Y)$ which can be efficiently calculated using Parzen windows.

$$I(\mathbf{Y};C) \cong H_2(\mathbf{Y}) - H_2(\mathbf{Y}|C) \tag{2}$$

$$H_2(\mathbf{Y}) \cong -\log \frac{1}{M} \sum_{m=1}^{M} G(y(m) - y(m-1), 2\sigma^2 I) \tag{3}$$

Here, $G(x, \sigma^2 I) = \exp(-\frac{1}{2}\frac{x^T x}{2\sigma^2})$ is a Gaussian kernel evaluated at x, where the kernel is centered at the origin and has a diagonal, isotropic covariance matrix.
Consider a training set composed of samples $y_j(n) = R*x_j(n)$. Let $M_j$ denote the number of samples belonging to category $j$, $M_c$ the number of categories, and $M_T = \sum_{j=1}^{M_c} M_j$ the length of the training set. Then the information theoretic criterion can be formulated as follows:

$$I(\mathbf{Y};C) = -\log \frac{1}{M_T} \sum_{m=1}^{M_T} G(y(m) - y(m-1), 2\sigma^2)$$

$$+ \sum_{j=1}^{M_c} \left( \frac{M_j}{M_T} \log \frac{1}{M_j} \sum_{m=1}^{M_j} G(y_j(m) - y_j(m-1), 2\sigma^2) \right) \tag{4}$$

Consequently, **R** can be learned via stochastic gradient ascent on *I(Y;C)*

$$
\begin{aligned}
R(t+1) &= R(t) + \eta_{MRMI} \cdot \frac{\partial I(Y;C)}{\partial R} \\
&= R(t) + \eta_{MRMI} \cdot \left( \frac{\partial H_2(Y)}{\partial R} - \frac{\partial H_2(Y|C)}{\partial R} \right)
\end{aligned}
\tag{5}
$$

where $\eta_{M\,RMI}$ is a learning rate.

Let $\Delta y_m = y(m) - y(m-1)$ and $\Delta x_m = x(m) - x(m-1)$ then $\Delta y_m = R^* \Delta x_m$. Therewith, the important derivatives for learning are as follows:

$$
\frac{\partial H_2(Y)}{\partial R} = \sum_{m=1}^{M_T} \frac{\partial H_2(Y)}{\partial \triangle y_m} \cdot \frac{\partial \triangle y_m}{\partial R}
\tag{6}
$$

$$
\begin{aligned}
\frac{\partial H_2(Y)}{\partial \triangle y_m} &= -\frac{1}{\frac{1}{M_T}\sum_{n=1}^{M_T} G(\triangle y_n, 2\sigma^2)} \cdot \frac{1}{M_T} \cdot G(\triangle y_m, 2\sigma^2) \cdot \left(-\frac{1}{4\sigma^2}\right) \cdot 2\triangle y_m \\
&= \frac{1}{2\sigma^2} \cdot \frac{G(\triangle y_m, 2\sigma^2)}{\sum_{n=1}^{M_T} G(\triangle y_n, 2\sigma^2)} \cdot \triangle y_m
\end{aligned}
\tag{7}
$$

$$
\frac{\partial \triangle y_m}{\partial R} = \triangle x_m^T
\tag{8}
$$

$$
\frac{\partial H_2(Y)}{\partial R} \times \frac{1}{\sum_{n=1}^{M_T} G(\triangle y_n, 2\sigma^2)} \cdot \sum_{m=1}^{M_T} G(\triangle y_m, 2\sigma^2) \cdot \left[ \triangle y_m * \triangle x_m^T \right]
\tag{9}
$$

$$
\begin{aligned}
\frac{\partial H_2(Y|C)}{\partial R} &= -\sum_{j=1}^{M_c} \frac{M_j}{M_T} \cdot \frac{\partial H_2(Y_j)}{\partial R} \\
&\searrow -\sum_{j=1}^{M_c} \frac{M_j}{M_T} \cdot \left\{ \frac{1}{\sum_{n=1}^{M_j} G(\triangle y_{jn}, 2\sigma^2)} \cdot \sum_{m=1}^{M_j} G(\triangle y_{jm}, 2\sigma^2) \cdot \left[ \triangle y_{jm} * \triangle x_{jm}^T \right] \right\}
\end{aligned}
\tag{10}
$$

Principle Feature Component Space

Without loss of generality the stimuli **X** is assumed to be white with zero mean and unit variance, i.e.

$$
mean(X) = E[X] = 0
\tag{11}
$$

$$
cov(X,X) = E\left[ (X - E[X]) * (X - E[X])^T \right] = I
\tag{12}
$$

Then the covariance of the feature vectors Y is as follows

$$
\begin{aligned}
cov(Y,Y) &= E\left[(Y - E[Y]) * (Y - E[Y])^T\right] \\
&= E\left[(R * X - E[R * X]) * (R * X - E[R * X])^T\right] \\
&= E\left[R * (X - E[X]) * (X - E[X])^T * R^T\right] \\
&= R * E\left[(X - E[X]) * (X - E[X])^T\right] * R^T \\
&= R * cov(X,X) * R^T \\
&= R * R^T \tag{13}
\end{aligned}
$$

Let $\Psi = [\psi_1\text{-}\psi_2...\psi_N]$ be the eigenvectors of $R * R^T$ and $A = [\lambda_1, \lambda_2,....\lambda_N]$ the associated eigenvalues. Then the principle feature component space can be obtained by

$$
Y = (\Psi^T * R) * X \tag{14}
$$

where $\Lambda$ denotes the variances along the principle components of the feature space. Furthermore, the eigenvalues $\Lambda$ represent the distribution of the features' energy among each of the principle components. Consequently, one can restrict feature extraction to the principle feature components whose cumulative energy content exceeds a threshold $\theta_{PCA}$ with $0 \le \theta_{PCA} \le 1$ (e.g. $\theta_{PCA} = 95\%$). Therefore, let the columns of $\Psi$ be arranged such that their associated eigenvalues are sorted in descending order, i.e. $\lambda_1 \ge \lambda_2 \ge ... \ge \lambda_N$, and let $\varepsilon(k)$ be the cumulative energy content among the first $k$ principle feature components, i.e. $\varepsilon(k) = \sum_{i=1}^{k} \lambda_i / \sum_{j=1}^{N} \lambda_j$. Then $\hat{\Psi}$ is chosen according to

$$
\hat{\Psi} = [\psi_1, \psi_2, \ldots, \psi_k] \quad \text{with} \quad \varepsilon(k-1) < \theta_{PCA} \le \varepsilon(k) \tag{15}
$$

Taking into account that $\Psi$ forms an orthonormal basis with $\hat{\Psi}^{-1} = \hat{\Psi}^T$, the feature extraction stage can be summarized by its feature extraction function

$$
Y = \Phi(X) = (\hat{\Psi}^T * R) * X \tag{16}
$$

as well as its inverse transformation

$$
X = \Phi^{-1}(Y) = (R^{-1} * \hat{\Psi}) * Y. \tag{17}
$$

Categorization

The aim of the categorization layer is to provide a categorization function $C = \Omega(Y)$ such that $\Omega$ is an approximation of the mapping $S_v - C$, where $S_y$ denotes the extracted feature space. Here, only a binary categorization task, i.e. $C = \{0, 1\}$ is regarded.

Normalized Gaussian Network

A Normalized Gaussian Network (NGnet) (see J. Moody and C. J. Darken, "Fast learning in networks of locally-tuned processing units", Neural Computation, 1(2):281-294, 1989) is used to implement $\Omega$. For the sake of generality in the following the D-dimensional output space $R^D$ is considered (even though in the application 1-dimensional outputs are used). Given an input y (out of the feature space *Sy*) an NGnet's output $\widetilde{c}(y)$ is calculated according to

$$\widetilde{c}(y) = \frac{1}{\sum_{j=1}^{M} \phi_j(y)} \cdot \sum_{i=1}^{M} \alpha_i \cdot \phi_i(y). \qquad (18)$$

Thereby, $\phi_i(y)$ denotes the response of hidden unit i to input y, *M* is the number of hidden units, and $\alpha_i$ the weight vector from unit i to the output units. In an NGnet the response of a hidden unit i is described by a radial basis functions (RBF), e.g. a multivariate Gaussian of form

$$\phi_i(y) = \exp\left(-\frac{1}{2} \cdot (y - \mu_i)^T \Sigma_i^{-1} (y - \mu_i)\right), \qquad (19)$$

where $\mu_i$ and $\Sigma_i$ denote the center and covariance matrix of the Gaussian. Therefore, an NGnet is similar to a RBF network except for the normalization of the output by the total activity of the hidden units. The effect of this normalization is a competition between the hidden units. More precisely, it is a competition for responsibility for the input *y*. In this way, the hidden units softly partition the input space $S_y$ into regions, such that each hidden unit is responsible for inputs stemming from its associated region. In other words, the hidden units represent local models (or local experts, see R.A. Jacobs et al., "Adaptive Mixtures of Local Experts", Neural Computation, 3, 79-87, 1991) of the mapping to be approximated. For this reason, these terms can be used interchangeably.

A further advantage of the normalization term is an improved inter- and extrapolation compared to RBF networks, as it is illustrated in **Figure 10**.

Online Expectation-Maximization (EM) Training

A stochastic interpretation of an NGnet has been proposed previously (see L. Xu, "RBF Nets, Mixture Experts, and Bayesian Ying-Yang Learning", Neurocomputing, 19, 223-257, 1998). Therefore, consider each local model to be described by a Gaussian, i.e. given an input y the *i*-th model's conditional probability density over the output c is

$$
\begin{aligned}
p(c|y, i, \Theta) &= G(c, \alpha_i, \Gamma_i) \\
&= (2\pi)^{-D/2} \cdot |\Gamma_i|^{-1/2} \cdot \exp\left(-\frac{1}{2} \cdot (c - \alpha_i)^T \Gamma_i^{-1} (c - \alpha_i)\right) \qquad (20)
\end{aligned}
$$

where $\Theta = \{\{\mu_i, \Sigma_i, \alpha_i, \Gamma_i\}_{i=1}^{M}\}$ describes the parameters of the NGnet. Furthermore, let p(y|i,$\Theta$) be a Gaussian probability density function (pdf), i.e.

$$
\begin{aligned}
p(y|i, \Theta) &= G(y, \mu_i, \Sigma_i) \\
&= (2\pi)^{-N/2} \cdot |\Sigma_i|^{-1/2} \cdot \exp\left(-\frac{1}{2} \cdot (y - \mu_i)^T \Sigma_i^{-1} (y - \mu_i)\right). \qquad (21)
\end{aligned}
$$

If $a_i = |\Sigma_i|^{1/2} / \sum_{j=1}^{M} |\Sigma_j|^{1/2}$ is chosen (which models the competition between the hidden units) the probability that the local model *i* is responsible for an input *y* turns out to be

$$p(i|y,\Theta) = \frac{a_i \cdot p(y|i,\Theta)}{\sum_{j=1}^{M} a_j \cdot p(y|j,\Theta)}$$

$$= \frac{\exp\left(-\frac{1}{2}\cdot(y-\mu_i)^T\Sigma_i^{-1}(y-\mu_i)\right)}{\sum_{j=1}^{M}\exp\left(-\frac{1}{2}\cdot(y-\mu_j)^T\Sigma_j^{-1}(y-\mu_j)\right)}$$

$$= \frac{\phi_i(y)}{\sum_{j=1}^{M}\phi_j(y)}. \qquad (22)$$

Consequently,

$$p(c|y,\Theta) = \sum_{i=1}^{M} p(i|y,\Theta)\cdot p(c|y,i,\Theta)$$

$$= \sum_{i=1}^{M} \frac{\phi_i(y)}{\sum_{j=1}^{M}\phi_j(y)}\cdot G(c,\alpha_i,\Gamma_i) \qquad (23)$$

is obtained, whose expectation is given by

$$E(c|y,\Theta) = \frac{1}{\sum_{j=1}^{M}\phi_j(y)}\cdot\sum_{i=1}^{M}\alpha_i\cdot\phi_i(y). \qquad (24)$$

As can be seen, the conditional expectation $E(c|y,\Theta)$ matches the definition of an NGnet. Therefore, the parameters $\Theta$ of the NGnet can be estimated by maximum likelihood learning on the log-likelihood of the observed data ($\{y\}$ - $\{c\}$=, which is given by

$$L(\Theta|\{y\},\{c\}) = \sum_{t=1}^{T}\log p(y_t,c_t|\Theta)$$

$$= \sum_{t=1}^{T}\log\sum_{i=1}^{M} a_i\cdot p(y_t|i,\Theta)\cdot p(c_t|y_t,i,\Theta). \qquad (25)$$

This can be achieved by an iterative Expectation-Maximization (EM) algorithm (as proposed in L. Xu, "RBF Nets, Mixture Experts, and Bayesian Ying-Yang Learning", Neurocomputing, 19, 223-257, 1998):

- E-Step: Given the current estimator value $\Theta$ the posterior probability of assigning the mapping task for the pair ($y_t$-$C_t$) to the $i$-th local model can be calculated according to Bayes rule:

$$p(i|y_t, c_t, \bar{\Theta}) \;=\; \frac{p(i|y_t, \bar{\Theta}) \cdot p(c_t|y_t, i, \bar{\Theta})}{\sum_{j=1}^{M} p(j|y_t, \bar{\Theta}) \cdot p(c_t|y_t, j, \bar{\Theta})}$$

$$=\; \frac{\phi_i(y_t) \cdot G(c_t, \alpha_i, \Gamma_i)}{\sum_{j=1}^{M} \phi_j(y_t) \cdot G(c_t, \alpha_j, \Gamma_j)} \tag{26}$$

- M-Step: By using the posterior probability the log-likelihood can be maximized by adapting $\bar{\Theta}$ to $\Theta^-$ with:

$$\mu_i^* \;=\; \frac{\sum_{t=1}^{T} p(i|y_t, c_t, \bar{\Theta}) \cdot y_t}{\sum_{t=1}^{T} p(i|y_t, c_t, \bar{\Theta})} \tag{27}$$

$$\Sigma_i^* \;=\; \frac{\sum_{t=1}^{T} p(i|y_t, c_t, \bar{\Theta}) \cdot [y_t - \mu_i^*][y_t - \mu_i^*]^T}{\sum_{t=1}^{T} p(i|y_t, c_t, \bar{\Theta})} \tag{28}$$

$$\alpha_i^* \;=\; \frac{\sum_{t=1}^{T} p(i|y_t, c_t, \bar{\Theta}) \cdot c_t}{\sum_{t=1}^{T} p(i|y_t, c_t, \bar{\Theta})} \tag{29}$$

$$\Gamma_i^* \;=\; \frac{\sum_{t=1}^{T} p(i|y_t, c_t, \bar{\Theta}) \cdot [c_t - \alpha_i^*][c_t - \alpha_i^*]^T}{\sum_{t=1}^{T} p(i|y_t, c_t, \bar{\Theta})} \tag{30}$$

The EM algorithm outlined above carries out batch learning, that is all samples ($y_t$ - $c_1$) for $t$ = 1.....T are known during training. For an online learning algorithm it is necessary to adapt the network parameters $\Theta$ sequentially whenever a new training sample is obtained. This is achieved via stochastic approximation of form

$$\Theta(t) = \Theta(t-1) + \eta \cdot \frac{\partial c_t(\Theta(t-1))}{\partial \Theta(t-1)} \tag{31}$$

with $\eta$ being a learning rate and $c_t$ the error for the t-th sample. Individual adaptive learning rates $\eta_i$ for each local model *i* have been suggested (cf, e.g., L. Xu, "RBF Nets, Mixture Experts, and Bayesian Ying-Yang Learning", Neurocomputing, 19, 223-257, 1998). They are calculated as follows

$$\eta_i(t) = \eta_{NG} \cdot \frac{p(i|y_t, c_t, \Theta(t-1))}{\gamma_i(t-1)} \tag{32}$$

with

$$n_i(t) \;=\; (1 - \eta_i(t)) \cdot n_i(t-1) + \eta_i(t) \tag{33}$$

$$\gamma_i(t) \;=\; \frac{n_i(t)}{\sum_{j=1}^{M} n_j(t)} \tag{34}$$

where $\eta_{NG}$ is a baseline learning rate. As can be seen, $\eta_i(t)$ calculates an averaged learning rate for the $i$-th model, whereas $\eta_i(t)$ denotes the $i$-th model's mean proportion on the learning of the overall network. Since the $i$-th models instantaneous learning rate $\eta_i(t)$ is proportional to the posterior probability that the i-th model describes the mapping of the $t$-th training sample scaled by $\eta_i(t)$, this mechanism implements a kind of learning rate homeostasis. In other words, a local model which best describes the mapping task for many training samples will incorporate each sample with relatively small instantaneous learning rates. In contrast, a local model which best describes the mapping task for just a few training samples, will learn on these samples with relatively high instantaneous learning rates. As time evolves, the local models will thus approach similar mean learning rates.

Using these adaptive learning rates the sequential EM algorithm proposed (see L. Xu, "RBF Nets, Mixture Experts, and Bayesian Ying-Yang Learning", Neurocomputing, 19, 223-257, 1998) can be summarized as follows:

- E-Step: Given the current estimator value $\Theta(t-1)$ the posterior probability $p(i|y_t, c_t, \Theta(t-1))$ of assigning the mapping task for the pair $(y_t - c_t)$ to the $i$-th local model can be calculated according to equation (26).
- M-Step: The log-likehood becomes maximized by calculating $\Theta(t)$ with

$$\mu_i(t) \;=\; \mu_i(t-1) + \eta_i(t)\cdot(y_t - \mu_i(t-1)) \tag{35}$$

$$\Sigma_i(t) \;=\; (1-\eta_i(t))\cdot\Sigma_i(t-1) + \eta_i(t)\cdot[y_t - \mu_i(t-1)][y_t - \mu_i(t-1)]^T \tag{36}$$

$$\alpha_i(t) \;=\; \alpha_i(t-1) + \eta_i(t)\cdot(c_t - \alpha_i(t-1)) \tag{37}$$

$$\Gamma_i(t) \;=\; (1-\eta_i(t))\cdot\Gamma_i(t-1) + \eta_i(t)\cdot[c_t - \alpha_i(t-1)][c_t - \alpha_i(t-1)]^T \tag{38}$$

Local Model Manipulation

One of the main problems of using NGnet is the specification of the network's complexity, i.e. the selection of the number of hidden units (local experts). Solving this problem is usually done by incorporating domain knowledge. Complex mapping tasks will obviously necessitate more hidden units than simple tasks. However, it is desirable to build general purpose network models which are able to autonomously adapt their complexity based on the problem at hand. For an NGnet, this involves mechanisms for assigning new local experts and removing, splitting, or merging existing local experts. Furthermore, criteria for deciding when to execute the model manipulation mechanisms have to be defined. In the following an approach for building an NGnet with adaptive complexity is outlined. In part similar model manipulation mechanisms have been previously suggested (cf. Schaal & Atkinson, "Constructive incremental learning from only local information", Neural Computation, 10(8):2047-2084, 1998 or Sato & Ishii, "Online EM Algorithm for the Normalized Gaussian Network", Neural Computation, 12 (2) :407-432, 2000).

Removing Models

Let $\rho^i$ denote the average of the posterior probability of assigning training samples to the $i$-th model, which can be calculated as

$$\rho_i(t) = (1-\eta_{NG})\cdot\rho_i(t-1) + \eta_{NG}\cdot p(i|y_t, c_t, \Theta(t-1)). \tag{39}$$

It can be easily seen that $\rho_i$ is proportional to the average number of samples for which the local model $i$ best describes the mapping task. Consequently, very small $\rho_i$ indicate local experts which may not be needed anymore such that $\rho_i < \theta_{remove}$ with $0 < \theta_{remove} \ll 1/M$ can serve as a criteria for removing the i-th local expert.

Let $M_i$ denote the *i*-th model and / $M = U_i M$, the set of all local experts with $|M|=M$. If the *i*-th model is removed, the $\rho_j$ is also adapted such that $\Sigma_j \rho_j$ before and after the removal remains unchanged, i.e.

$$\mathcal{M}^* = \mathcal{M} \setminus \{\mathcal{M}_i\} \tag{40}$$

$$\rho_j^* = \frac{M}{M^*} \cdot \rho_j \qquad , \forall i \in \{j | \mathcal{M}_j \in \mathcal{M}^*\}. \tag{41}$$

Assigning Models

A new local expert should be assigned, if a training sample $(y_t, c_t)$ is obtained which is not sufficiently well described by any of the existing local experts or for which the NGnet's approximation of the mapping task yields a large error. These criteria can be expressed as follows

$$\max_i p(y_t, c_t | i, \Theta(t-1)) < \theta_{assign_1} \tag{42}$$

$$e_t(\Theta(t-1)) > \theta_{assign_2} \tag{43}$$

where

$$\begin{aligned} p(y_t, c_t | i, \Theta(t-1)) &= p(c_t | y_t, i, \Theta(t-1)) \cdot p(y_t | i, \Theta(t-1)) \\ &= G(c_t, \alpha_i(t-1), \Gamma_i(t-1)) * G(y_t, \mu_i(t-1), \Sigma_i(t-1)) \end{aligned} \tag{44}$$

$$e_t(\Theta(t-1)) = [c_t - \tilde{c}(y_t)]^T [c_t - \tilde{c}(y_t)] \tag{45}$$

as well as $\theta_{assign1}$, and $\theta_{assign2}$ being thresholds .

If any of these conditions is fulfilled, a new local model $M_{new}$ is created, added to the NGnet, and the $\rho_j$ is adapted such that $\Sigma_j \rho_j$ before and after the assignment remain unchanged:

$$\mathcal{M}^* = \mathcal{M} \cup \{\mathcal{M}_{new}\} \tag{46}$$

$$\rho_j^* = \frac{M}{M^*} \cdot \rho_j \qquad , \forall i \in \{j | \mathcal{M}_j \in \mathcal{M}\}. \tag{47}$$

Thereby, the new model is initialized as

$$\mu_{new} = y_t \tag{48}$$

$$\alpha_{new} = c_t \tag{49}$$

$$\Sigma_{new} \;=\; \xi_1 \cdot \max(\chi \cdot \chi_{min}) \cdot I \qquad (50)$$

$$\Gamma_{new} \;=\; \xi_2 \cdot \max_{i \in \mathcal{M}} \Gamma_i \qquad (51)$$

$$\rho_{new} \;=\; \frac{1}{M+1} \qquad (52)$$

with

$$\chi = \min_{i \in \mathcal{M}} \frac{[\mu_i(t-1) - \mu_{new}]^T [\mu_i(t-1) - \mu_{new}]}{N}, \qquad (53)$$

$\xi_1$ and $\xi_2$ being appropriate scaling constants, and $\chi_{min}$ denoting a constant which ensures a minimum size of the new model's receptive field. In the special case of assigning the first local model (i.e $M = 0$) $\Sigma_{new}$ and $\Gamma_{new}$ become initialized to some predefined $\Sigma_{init}$ and $\Gamma_{init}$, respectively, as well as $\rho_{new} = 1$.

Splitting Models

If the i-th local model's quality of approximating the mapping task becomes insufficient, the input space region corresponding to its receptive field should be refined and covered by multiple experts. An insufficient approximation quality reflects itself in a diffuse probability distribution $p(c|y.i.\Theta) = G(c.\alpha_i, \Gamma_i)$ over the output space. Consequently, the size of the Gaussian (for which $|\Gamma_i|$ is an indicator) is an appropriate criteria for splitting a model. In summary, the i-th model becomes split if

$$|\Gamma_i| > \theta_{split}, \qquad (54)$$

where $\theta_{split}$ is an appropriately chosen threshold.

If this criteria is met, $\mathcal{M}_i$ becomes adjusted to $\mathcal{M}_i^\star$, a new model $M_{new}$ is created, and finally added to the model pool.

$$\mathcal{M}^\star = (\mathcal{M} \backslash \mathcal{M}_i) \cup \{\mathcal{M}_i^\star, \mathcal{M}_{new}\} \qquad (55)$$

Thereby, the spin-off models become initialized as

$$\mu_i^\star \;=\; \mu_i + \xi_3 \cdot \sqrt{\kappa_1} \cdot \zeta_1 \qquad (56)$$

$$\mu_{new} \;=\; \mu_i - \xi_3 \cdot \sqrt{\kappa_1} \cdot \zeta_1 \qquad (57)$$

$$\alpha_i^\star \;=\; \alpha_{new} = \alpha_i \qquad (58)$$

$$\Sigma_i^* = \Sigma_{new} = \frac{4}{\kappa_1} \cdot \zeta_1 \zeta_1^T + \sum_{n=2}^{N} \frac{1}{\kappa_n} \cdot \zeta_n \zeta_n^T \qquad (59)$$

$$\Gamma_i^* = \Gamma_{new} = 0.5 * \Gamma_i \qquad (60)$$

$$\rho_i^* = \rho_{new} = 0.5 * \rho_i \qquad (61)$$

where $\zeta_n$ and $K_n$ denote the eigenvectors and eigenvalues of $\Sigma_i$ sorted in descending order of the eigenvalues, i.e. $K_1 \geq K_2 \geq ... \geq K_1$. Furthermore, $\xi_3$ is an appropriate constant.

**Figure 11** illustrates how the partitioning of the input space becomes refined by splitting a local model.

Merging Models

If multiple local models are sufficiently similar, they can be merged to one local expert. Let $\mathcal{U}(\mathcal{M}_i, \mathcal{M}_j)$ be a function measuring the similarity between two local models $i$ and $j$ with $0 \leq \mathcal{U}(\mathcal{M}_i, \mathcal{M}_j) \leq 1$, where a value of 1 corresponds to model identity and 0 to total model dissimilarity. Furthermore, let $v(p(a) . q((a))$ be a function measuring the similarity between to multivariate pdfs $p(a)$ and $q(a)$ with $0 \leq v(p(a) . q(a)) = \leq 1$. Then

$$\begin{aligned} \mathcal{U}(\mathcal{M}_i, \mathcal{M}_j) &= \mathcal{V}(p(y|i, \Theta), p(y|j, \Theta)) \cdot \mathcal{V}(p(c|y, i, \Theta), p(c|y, j, \Theta)) \\ &= \mathcal{V}(G(y, \mu_i, \Sigma_i), G(y, \mu_j, \Sigma_j)) \cdot \mathcal{V}(G(c, \alpha_i, \Gamma_i), G(c, \alpha_j, \Gamma_j)) \end{aligned} \qquad (62)$$

is defined. Consequently, measuring the similarity between local experts reduces to measuring the similarity between pdfs (in our case multivariate Gaussians). The similarity between pdfs can be measured by the overlap between them. Fortunately, the *Bhattacharyya Coefficient (BC)* provides an approximation for the overlap between two pdfs. It is defined as

$$BC(p, q) = \int_a \sqrt{p(a) \cdot q(a)} da \qquad (63)$$

for which a closed form solution exists in case of multivariate Gaussians $p(a) = G(a, \mu_p, \Sigma_p)$ and $q(a) = G(a, \mu_q, \Sigma_q)$:

$$D_B(p, q) = \frac{1}{8} \cdot (\mu_p - \mu_q)^T * \Sigma^{-1} * (\mu_p - \mu_q) + \frac{1}{2} \cdot \log \frac{|\Sigma|}{\sqrt{|\Sigma_p| \cdot |\Sigma_q|}} \qquad (64)$$

$$BC(p, q) = \exp(-D_B(p, q)) \qquad (65)$$

Thereby, $\Sigma = (\Sigma_p + \Sigma_q)/2$ and $D_B$ is called the *Bhattacharyya distance*. In summary, the similarity between two local models $\mathcal{U}(\mathcal{M}_i, \mathcal{M}_j)$ is measured by setting $v(p(a), q(a)) = BC(p(a).q(a))$. If

$$U(\mathcal{M}_i, \mathcal{M}_j) > \theta_{merge},\qquad(66)$$

$M_i$ and $M_j$ are merged to a new expert $M_{new}$. Thereby, $\theta_{marge}$ is some predefined threshold denoting the maximum overlap between local experts. Finally, the NGnet is adapted such that

$$\mathcal{M}^* = (\mathcal{M} \setminus \{\mathcal{M}_i, \mathcal{M}_j\}) \cup \{\mathcal{M}_{new}\}.\qquad(67)$$

The creation of the new model $M_{new}$ involves the merging of multivariate Gaussian pdfs ($G(y, \mu_i, \Sigma_i)$ and $G(y, \mu_j, \Sigma_j)$) to $G(y, \mu_{new}, \Sigma_{new})$ as well as $G(c, \alpha_i, \Gamma_i)$ and $G(c, \alpha_j, \Gamma_j)$ to $G(c, \alpha_{new}, \Gamma_{new})$) and the determination of $\rho_{new}$. The latter is set to $\rho_{new} = \rho_i + \rho_j$, whereas for the former problem multiple approaches exist.

In general, we $K$ Gaussian pdfs $G(a, \mu_i, \Sigma_i)$, $i = 1, .... K$ (in our case K=2) are clustered and the cluster is represented by a Gaussian pdf $G(a, m, S)$ such that

$$\sum_{i=1}^{K} \omega_i \cdot D(G(a, \mu_i, \Sigma_i) || G(a, m, S))\qquad(68)$$

is minimal. Thereby, $D$ denotes a measure for the divergence between the pdfs and $\theta \le \omega_i \le 1$ weights with $\Sigma_i \omega_i = 1$. In our scenario $\omega_r = \rho_r / \Sigma_{k \in \{i,j\}} \rho_k$ with $r = i,j$ is set such that important local experts (those with a high mean posterior probability $\rho$ of assigning training samples to them) will dominate the merging over unimportant ones.

Existing approaches for solving such a minimization problem mainly differ in the used divergence measure D. Here, two of them are of particular interest: Firstly, *Kullback-Leibler divergence* based clustering (see Davis & Dhillon, "Differential entropic clustering of multivariate Gaussians", Advances in Neural Information Processing Systems 19, 2006) and, secondly, *Jenson-Shannon divergence* based clustering (see Myrvoll & Soong, "On divergence based clustering of normal distributions and its application to HMM adaptation", Proc. of the EUROSPEECH, 2003). In the following both approaches are shortly reviewed and compared to each other.

- clustering based on the *Kullback-Leibler divergence:*

The *Kullback-Leibler divergence* is defined as

$$D_{KL}(p(a) || q(a)) = \int_a p(a) \log \frac{p(a)}{q(a)} da\qquad(69)$$

which for Gaussian pdfs simplyfies to

$$
\begin{aligned}
D_{KL}(G(a, \mu, \Sigma) || G(a, m, S)) &= +\frac{1}{2} \cdot \left( \text{trace}(\Sigma S^{-1}) - \log |\Sigma S^{-1}| - d \right) \\
&\quad + \frac{1}{2} \cdot (\mu - m)^T S^{-1}(\mu - m) \\
&= \frac{1}{2} \cdot D_{Burg}(\Sigma, S) + \frac{1}{2} \cdot D_{Mahal}(\mu, m, S). \quad(70)
\end{aligned}
$$

Thereby, $D_{Burg}$ denotes the *Burg matrix divergence* and $D_{Mahal}$ the *Mahalanobis distance.* When using this divergence measure the optimization problem of equation (68) becomes minimized by

$$m^* \;=\; \sum_{i=1}^{K} \omega_i \cdot \mu_i \tag{71}$$

$$S^* \;=\; \sum_{i=1}^{K} \omega_i \cdot \left(\Sigma_i + (\mu_i - m^*)(\mu_i - m^*)^T\right) \tag{72}$$

- clustering based on the *Jenson-Shannon divergence:*

   The *Jenson-Shannon divergence* is a symmetrized version of the *Kullback-Leibler divergence* and defined as

$$D_{JS}(p(a)\|q(a)) = \frac{1}{2}\left(D_{KL}(p(a)\|q(a)) + D_{KL}(q(a)\|p(a))\right). \tag{73}$$

   For Gaussian pdfs it simplyfies to

$$D_{JS}(G(a,\mu,\Sigma)\|G(a,m,S)) \;=\; \frac{1}{4}\cdot \mathrm{trace}\left\{(\Sigma^{-1}+S^{-1})(\mu-m)(\mu-m)^T \right.$$
$$\left. +\Sigma S^{-1} + S\Sigma^{-1} - 2I\right\}. \tag{74}$$

   Using $D_{JS}$ in equation (68) the function to be optimized becomes

$$\mathcal{F} = \sum_{i=1}^{K} \omega_i \cdot \frac{1}{4}\cdot \mathrm{trace}\left\{(\Sigma_i^{-1}+S^{-1})(\mu_i-m)(\mu_i-m)^T + \Sigma_i S^{-1} + S\Sigma_i^{-1} - 2I\right\} \tag{75}$$

   The parameters *m\** and *S\** of the optimal Gaussian can be obtained by setting the derivative of *F* with respect to the parameters to 0.

$$\begin{aligned}
0 \;&=\; \frac{\partial \mathcal{F}}{\partial m} \\
&=\; \sum_{i=1}^{K} \omega_i \cdot \frac{1}{4}\cdot \frac{\partial\,\mathrm{trace}\left\{(\Sigma_i^{-1}+S^{-1})(\mu_i-m)(\mu_i-m)^T\right\}}{\partial(\mu_i-m)(\mu_i-m)^T} \cdot \frac{\partial(\mu_i-m)(\mu_i-m)^T}{\partial m} \\
&=\; \sum_{i=1}^{K} \omega_i \cdot \frac{1}{4}\cdot (\Sigma_i^{-1}+S^{-1})^T \cdot 2\cdot (\mu_i-m) \\
&=\; \frac{1}{2}\cdot \sum_{i=1}^{K} \omega_i \cdot (\Sigma_i^{-1}+S^{-1})(\mu_i-m) \tag{76}
\end{aligned}$$

   Consequently, the mean of the Gaussian can be calculated by

$$m^{*} = \left[\sum_{i=1}^{K} \omega_i \cdot (\Sigma_i^{-1} + S^{*-1})\right]^{-1} \cdot \left[\sum_{i=1}^{K} \omega_i \cdot (\Sigma_i^{-1} + S^{*-1})\mu_i\right].\qquad (77)$$

Similarly, it is

$$\begin{aligned}
0 &= \frac{\partial \mathcal{F}}{\partial S} \\
&= \sum_{i=1}^{K} \omega_i \cdot \frac{1}{4} \cdot \left[-S^{-1}(\mu_i - m)(\mu_i - m)^T S^{-1} - S^{-1}\Sigma_i S^{-1} + \Sigma_i^{-1}\right] \\
&= \sum_{i=1}^{K} \omega_i \cdot \left[(\mu_i - m)(\mu_i - m)^T + \Sigma_i - S\Sigma_i^{-1}S\right] \\
&= \left\{\sum_{i=1}^{K} \omega_i \cdot \left[(\mu_i - m)(\mu_i - m)^T + \Sigma_i\right]\right\} - S\left\{\sum_{i=1}^{K} \omega_i \cdot \Sigma_i^{-1}\right\}S \qquad (78)
\end{aligned}$$

which fits the matrix Ricatti equation

$$0 = A + BS + SB^{*} - SCS \qquad (79)$$

with

$$A = \sum_{i=1}^{K} \omega_i \cdot \left[(\mu_i - m^{*})(\mu_i - m^{*})^T + \Sigma_i\right] \qquad (80)$$

$$B = 0 \qquad (81)$$

$$C = \sum_{i=1}^{K} \omega_i \cdot \Sigma_i^{-1}. \qquad (82)$$

A solution to this equation is given by

$$S^{*} = [u_1, \ldots, u_d] \cdot [w_1, \ldots, w_d]^{-1} \qquad (83)$$

with u, and $\omega_i$ being the upper and lower parts of vector $v_i$

$$v_i = \begin{bmatrix} u_i \\ w_i \end{bmatrix} \qquad (84)$$

**21**

where $\upsilon_1 \ldots \upsilon_d$ are the eigenvectors corresponding to the d positive eigenvalues (sorted in descending order) of matrix

$$\begin{bmatrix} B & A \\ C & -B^* \end{bmatrix}. \qquad (85)$$

Consequently, the determination of the optimal mean $m$ and covariance matrix $S$ involves the iterative application of equations (83) and (77) with

$$m^* = \sum_{i=1}^{K} \omega_i \cdot \mu_i \qquad (86)$$

being a good starting point of this iterative process.

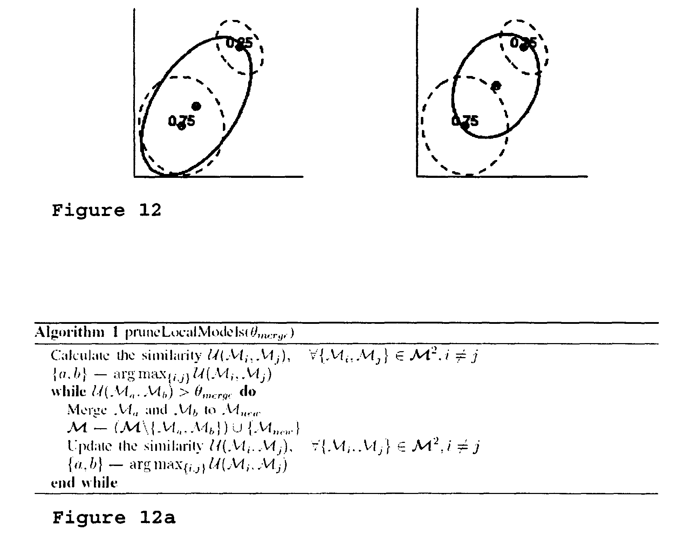

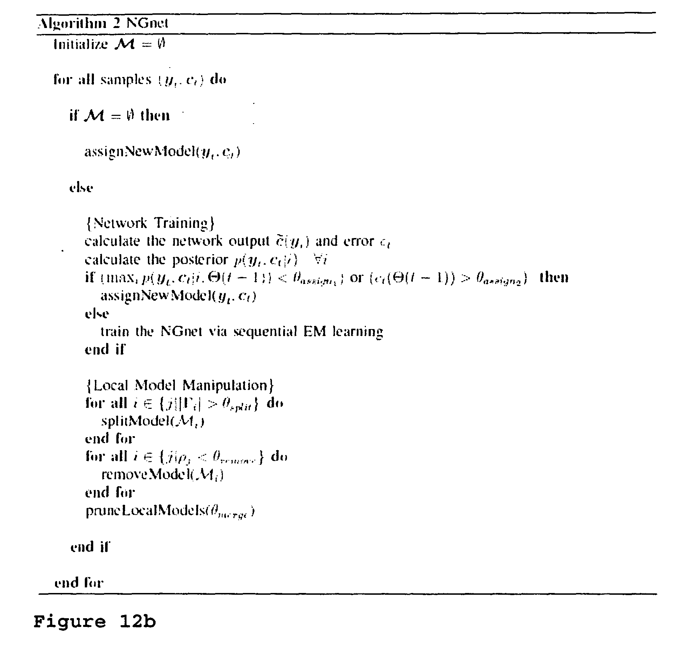

The result of the two techniques to the task of clustering two Gaussians is exemplarily depicted in **Figure12**. As can be seen, the mechanisms result in different Gaussians.

More precisely, the Gaussian obtained via Kullback-Leiber divergence based clustering is larger than the one obtained by Jenson-Shannon divergence based clustering. It is nearly the union of the individual Gaussian's receptive fields. Thus, Kullback-Leibler divergence based clustering seems to be the appropriate technique when the receptive fields of Gaussians should be joined. However, it is inappropriate for joining (normalized) probability distributions, for which Jenson-Shannon divergence based clustering yields better results.

Since the competition between the local experts of an NGnet rules out the normalization of p(y|i, Θ) (see equation (26)) Kullback-Leibler divergence based clustering was used according to equations (71)-(72) to construct $G$ ($y$, $\mu_{new}$, $\Sigma_{new}$) of the new local expert $M_{new}$. In constrast, Jenson-Shannon divergence based clustering according to equations (86), (83),(77) is used for calculating $G(c, \alpha_{new}, \Gamma_{new})$.

In overall, the merging of Gaussians can be done using the greedy strategy depicted in the algorithm of **Figure 12a**.

Example: Benchmark Function Approximation

The overall process of using an NGnet to build a categorization function $\tilde{C} = \Omega(Y)$ is outlined in Algorithm 2 shown in **Figure 12b**. In order to test the algorithm, it was applied to the cross function, which is a widely used benchmark for universal function approximation. The cross function is defined as

$$c = \max \left\{ \exp(-10y_1^2), \exp(-50y_2^2), 1.25 \cdot \exp(-5(y_1^2 + y_2^2)) \right\}. \qquad (87)$$

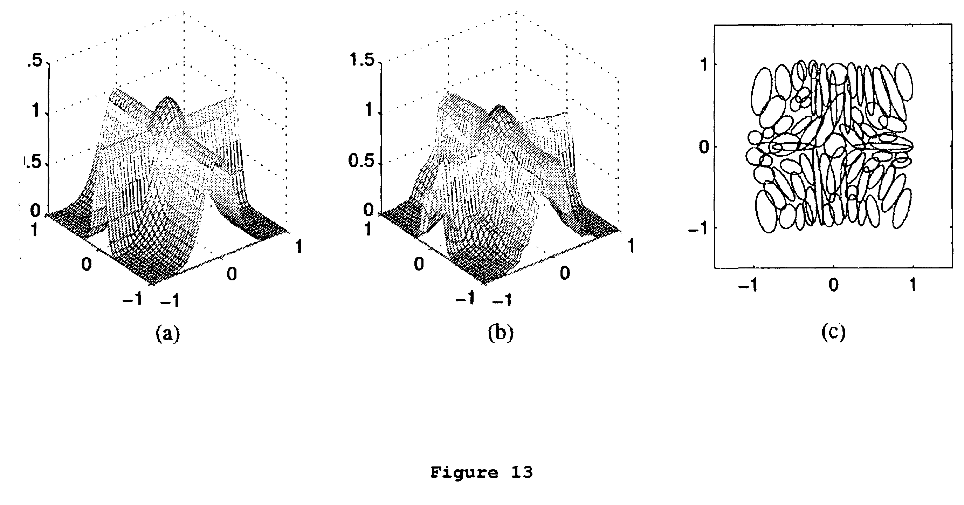

The result of approximating the cross function with an NGnet as previously described is shown in **Figure 13**. As can be seen, the receptive fields of the local experts become oriented along the dimension of minimal gradient. Furthermore, the partitioning of the input space becomes fine grained in regions where the cross function's gradient is high, whereas just few experts are needed in regions where the cross function does not change a lot.

Connecting Feature Extraction & Categorization

Feature extraction and categorization are tightly coupled, which necessitates the consideration of some aspects within the overall categorization framework.

Generating Training Samples

An NGnet is a generative model for universal function approximation. In other words, in addition to the evaluation of the network on inputs $y$ it provides means to generate input samples $y$ given an network output $\widetilde{C}$. Formally, such a generative process can be done by drawing $K$ samples $y_1, ..., y_K$ from the distribution $p(y|c = \widetilde{c}, \Theta)$.

In order to do so, the posterior probability that local model $i$ produces an output $\widetilde{c}$ is first determined. This probability can be calculated using Bayes rule as follows

$$
\begin{aligned}
p(i|c = \widetilde{c}, \Theta) &= \frac{p(c = \widetilde{c}|i, \Theta) \cdot p(i)}{\sum_{j=1}^{M} p(c = \widetilde{c}|j, \Theta) \cdot p(j)} \\
&= \frac{G(\widetilde{c}, \alpha_i, \Gamma_i) \cdot \rho_i}{\sum_{j=1}^{M} G(\widetilde{c}, \alpha_j, \Gamma_j) \cdot \rho_j}.
\end{aligned}
\tag{88}
$$

Consequently, the number of samples is determined that each local model should generate by drawing K samples from $p(i, c = \widetilde{c}, \Theta)$. Let $K_1 ..., K_M$ be the result of this process. What remains is to draw $K_i$ samples from the Gaussian distribution $p(y|i, \Theta) = G(y, \mu_i, \Sigma_i)$ for each local model i.

Therefore, let $Z_i = [z_{i,1}..., z_{i,K_i}]$ with $z_{i,j} \sim N(0.I)$. Then the samples $\mathbf{Y_i} = [y_{i,1}...,y_{i,K_i}]$ can be calculated by

$$
Y_i = \mu_i + A * Z_i
\tag{89}
$$

where A is obtained from the Cholesky decomposition $A + A^T = \Sigma_i$.

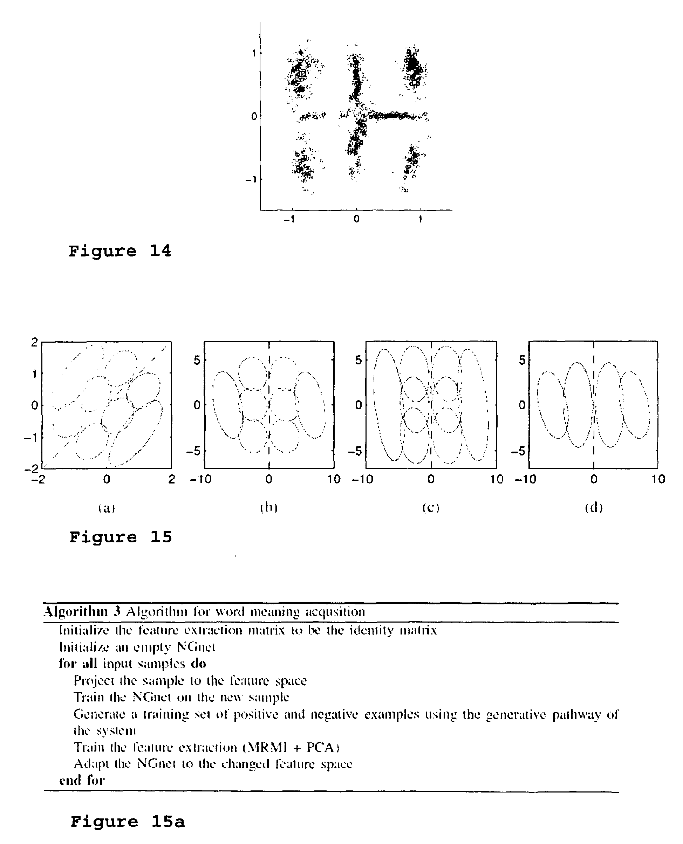

**Figure 14** illustrates the result of this generative process on the example of the cross function.

Training a Feature Extraction Module

As previously noted, the generative mode of NGnet is able to produce training sample $(y,c)$ where $y$ is a feature pattern and c its corresponding category label. However, in order to train the MRMI feature extraction training samples $(x,c)$ with $x$ being an input pattern are needed. Consequently first it is needed to transform a feature pattern $y$ into an input pattern $x$. For a feature extraction in form of a linear transformation this can be easily done according to

$$
\begin{aligned}
x &= \left[ \hat{\Psi}^T(t) * R(t) \right]^{-1} * y \\
&= R(t)^{-1} * \hat{\Psi}(t) * y
\end{aligned}
\tag{90}
$$

Given the training samples $(x,c)$ the feature extraction can be learned in a supervised fashion as described above.

Adaptation to Continuously Changing Feature Space

The feature space (on which categorization is based on) continuously changes. Therefore, the NGnet has to continuously adapt its local experts. More precisely, the local models have to adapt their input probability distributions $p(y|i, \Theta) = G(y, \mu_i, \Sigma_i)$. If affine transformations of form

$$
\tilde{y} = A * y + b
\tag{91}
$$

is considered then the new Gaussian pdfs under this transformation are as follows

$$
G(\tilde{y}, A * \mu_i + b, A * \Sigma_i * A^T).
\tag{92}
$$

Thereby, it is

$$A(t) \;=\; \left[ \tilde{\hat{\Psi}}^T(t) * \tilde{R}(t) \right] * \left[ \hat{\Psi}^T(t) * R(t) \right]^{-1}$$
$$=\; \tilde{\hat{\Psi}}^T(t) * \tilde{R}(t) * R(t)^{-1} * \hat{\Psi}(t) \qquad (93)$$

$$b \;=\; 0. \qquad (94)$$

where $\hat{\tilde{\Psi}}(t)$, $R(t)$ as well as $\hat{\Psi}(t)$, $R(t)$ denote the feature extraction matrices before and after the application of MRMI learning at time t.

Improving Generalization

The generalization capabilities of the overall system can be improved in several ways. One has been already mentioned above: the pruning of feature dimensions based on their relevance for the categorization task. Moreover, it is possible to incorporate the relevance of feature dimensions into the process of merging local experts. The underlying idea is as follows: Local experts which are separated along important feature dimensions should stay separated since this difference covers important aspects of the categorization task at hand. In contrary, the merging should be preferably done along unimportant feature dimensions. This can be achieved by incorporating the relevance of feature dimensions into the calculation of the similarity between local models. Therefore, let $\lambda_1, \lambda_2, .... \lambda_k$ be the eigenvalues of the principle feature dimensions (see above). A transformation matrix **W** is constructed as follows

$$W = \begin{pmatrix} \sqrt{\lambda_{max}/\lambda_1} & 0 & \cdots & 0 \\ 0 & \sqrt{\lambda_{max}/\lambda_2} & \cdots & 0 \\ \cdots & \cdots & \cdots & \cdots \\ 0 & 0 & \cdots & \sqrt{\lambda_{max}/\lambda_k} \end{pmatrix}. \qquad (95)$$

where $\lambda_{max}$ is the maximum eigenvalue, and calculate the similarity between the local models $\mathcal{M}_i$ and $\mathcal{M}_j$ according to

$$\mathcal{U}(\mathcal{M}_i, \mathcal{M}_j) = \mathcal{V}(G(y, \mu_i, W\Sigma_i W^T), G(y, \mu_j, W\Sigma_j W^T)) \cdot \mathcal{V}(G(c, \alpha_i, \Gamma_i), G(c, \alpha_j, \Gamma_j)). \qquad (96)$$

As can be seen, the Gaussians representing the input probability distributions of the local experts become scaled, such that they cover larger portions of the input space along unimportant feature dimensions, whereas the coverage along the most important dimension remains unchanged. By doing so, the overlap between the local experts is artificially increased which results in an enhanced merging of them along unimportant feature dimensions and, thereby, yields an improved generalization.

**Figure 15** illustrates this process. Therefore, consider a classification task on the input space $x = [x_1, x_2]$ with $x_1 - x_2 = 0$ being the separation border between two classes. Then, NGnet may result in local experts which partition the input space as shown in (a). Based on these prototypical experts, MRMI feature extraction is able to extract the principle feature dimensions in conjunction with their relevance (see (a)). In the following, (b) shows the adaptation of NGnet to the changed feature space. Finally, the similarity between the experts is calculated based on the scaled experts shown in (c). Based on this similarity, the experts depicted in (b) become merged. The result of this merging is shown in (d).

Algorithm

The sketch of the overall algorithm for the online category learning with adaptive feature space is given in Algorithm 3 shown in **Figure 15a**.

Experimental Results

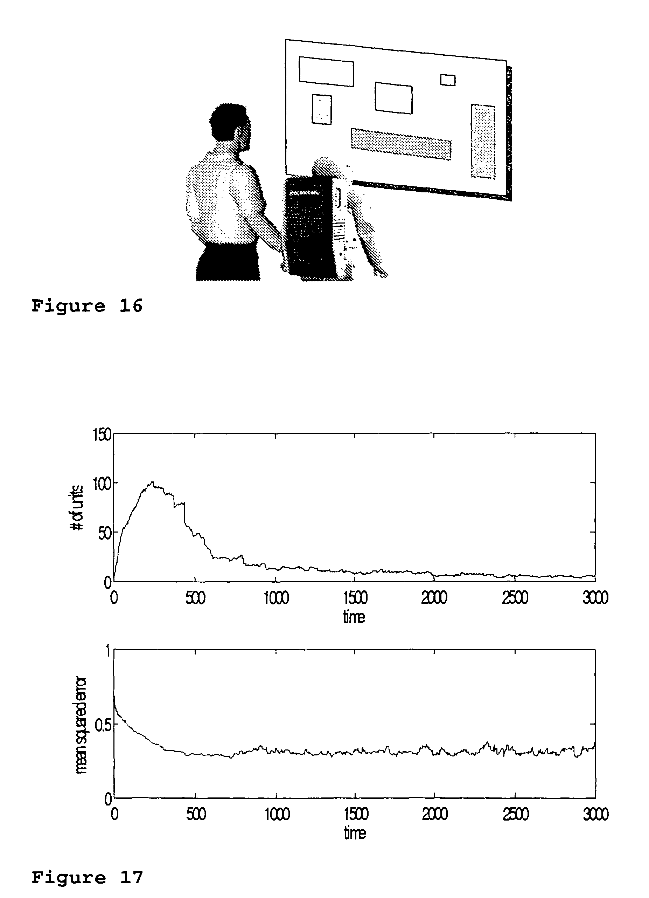

The framework was tested in the domain of word meaning acquisition. Therefore, the experimental setup illustrated in **Figure 16** is chosen, where a learner and a tutor observe a scene composed of randomly generated geometric objects. In the experiments, the tutor randomly selects two out of the objects and tells the learner whether the first object is "left to" the second object or not. Consequently, the system has to form a category corresponding to the meaning of "left to".

The setup of the framework corresponds to the configuration shown in Figure 1 and Figure 2. It is composed of one feature extraction module and one binary categorization module. Each object in the scene is described by its absolute (horizontal and vertical) position, its width and height, and its color in RGB. Consequently, the system observes 14-dimensional input vectors (7 dimensions per object) as well as the corresponding category label. The FEM and the CM were trained sequentially after each occurrence of a new training sample.

The results of this experiment are depicted in **Figure 17**, where the number of hidden units of the NGnet (upper panel) as well as the mean squared error (lower panel) which has been calculated on a randomly generated test set is plotted. As can be seen, first the number of hidden units steadily increases, then saturates, and finally decreases to a minimum which is maintained afterwards. The initial increase in the number of hidden units corresponds to the memorization of observations. Since there is no prior knowledge, initially every observation is new for the system and consequently has to be memorized. But after a while all new observation can be explained using already acquired knowledge. Consequently, these new observation do not have to be memorized which results in the saturation of the number of hidden units.

At the same time the FEM continuously tries to extract category-discriminative features. After a while the FEM is able to extract the informative feature dimension, which is the difference between the absolute horizontal positions of the two objects. Due to this fact, other dimensions become unimportant which results in a pruning of memorized observations or, in other words, a reduction in the number of hidden units. Consequently, a gradual shift from prototype-based categorization (where new inputs are categorized according to their similarity with memorized prototypes) to rule-based categorization (where a single feature dimension serves as a rule for categorization) is observed.

Furthermore, the bottom panel of **Figure 17** shows that the mean squared error quickly decreases and afterwards maintains its low level which corresponds to categorization errors of approx. 2-5%. **Figure 17** further shows that even though generalization may take some time, the categorization error is low just after a few examples. This is due to the fact that the memorized prototypes are used within a prototype-based categorization scheme. This prototype-based categorization already yields a suitable categorization performance. The continuous and open-ended generalization (in terms of extracting relevant feature dimensions and adapting the categorizer to the changed feature space) does not significantly reduce the categorization error, but it does so for the number of hidden units. Therefore, the benefit of generalization (in this experiment) is not an improved performance but a less complex representation necessary for achieving such a performance.

It should be understood that the foregoing relates only to embodiments of the invention and that numerous changes and modifications made therein may be made without departing from the scope of the invention as set forth in the following claims.

References

A.K. Jain et al., "Statistical Pattern Recognition: A Review", IEEE Transactions on Pattern Analysis and Machine Intelligence, 22(1):4-37, 2000

G.A. Carpenter and S. Grossberg, "Adaptive Resonance Theory", The Handbook of Brain Theory and Neural Networks, MIT Press, Cambridge, USA, 2003

S. Kirstein et al., "A Vector Quantization Approach for Life-Long Learning of Categories", Advances in Neuro-Information Processing, LNCS 5506, pp. 805-812, Springer Berlin / Heidelberg, 2009

S. Ozawa et al., "Incremental Learning of Feature Space and Classifier for Face Recognition", Neural Networks, 18(5-6):575-584, 2005

C.M. Bishop, "Neural Networks for Pattern Recognition", Oxford University Press, New York, USA, 1995

S. Haykin, "Neural Networks: a comprehensive foundation", 2nd edition, Prentice-Hall, New Jersey, USA, 1999

K.E. Hild et al., "Feature Extraction Using Information-Theoretic Learning", IEEE Transactions of Pattern Analysis and Machine Intelligence, 28(9):1385-1392, 2006

J. Moody and C. J. Darken, "Fast learning in networks of locally-tuned processing units", Neural Computation, 1 (2) :281-294, 1989

R.A. Jacobs et al., "Adaptive Mixtures of Local Experts", Neural Computation, 3, 79-87, 1991

Xu, "RBF Nets, Mixture Experts, and Bayesian Ying-Yang Learning", Neurocomputing, 19, 223-257, 1998

Schaal & Atkinson, "Constructive incremental learning from only local information", Neural Computation, 10(8): 2047-2084, 1998

Sato & Ishii, "Online EM Algorithm for the Normalized Gaussian Network", Neural Computation, 12(2):407-432, 2000

Davis & Dhillon, "Differential entropic clustering of multivariate Gaussians", Advances in Neural Information Processing Systems 19, 2006

Myrvoll & Soong, "On divergence based clustering of normal distributions and its application to HMM adaptation", Proc. of the EUROSPEECH, 2003

## Claims

**1.** A method for categorizing sensorial input patterns, comprising:

- receiving from an accepting means at least one input pattern including sensorial information representing observations,
- extracting at least one feature pattern by transforming the input pattern by application of at least one feature extraction module which learns from the performed extraction process,
- categorizing the feature pattern into a category by application of at least one learnable categorization module which learns from the performed categorization process,

- wherein the learning of the feature extraction module uses input from at least one categorization module based on which the feature extraction module extracts a feature pattern discriminating the categories obtained by the categorization module, and
- wherein the extraction and categorization processes are performed on a processing means,

- storing a category derived from the categorization process with features of the input pattern, and
- returning category information for the input pattern by an output means.

**2.** The method according to claim 1, wherein the learning of the feature extraction module includes training.

**3.** The method according to claim 1 or 2, wherein the training of the feature extraction module uses training samples generated by the at least one categorization module.

**4.** The method according to any one of the claims 1-3, wherein the training of the feature extraction module uses training samples selected based on information derived from the at least one categorization module.

**5.** The method according to any one of the preceding claims, wherein the feature extraction module and the categorization module learn incrementally.

**6.** The method according to any one of the preceding claims, wherein the learning of a feature extraction module relies on at least one of a maximization of mutual information, a discriminant analysis, a principle component analysis, and an independent component analysis,

**7.** The method according to any one of the preceding claims, wherein the categorization module is implemented by an artificial neural network.

**8.** The method according to claim 7, wherein the artificial neural network is a normalized Gaussian network.

**9.** The method according to claim 7 or 8, wherein the normalized Gaussian network is an adaptive normalized Gaussian network.

**10.** The method according to any one of the preceding claims, wherein the accepting means for accepting an input pattern is a sensor and/or a hardware interface.

**11.** The method according to any one of the preceding claims, wherein the processing means is a processor and/or a signal processing unit formed of hardware.

**12.** The method according to any one of the preceding claims, wherein the processing means is adapted for parallel processing.

**13.** The method according to any one of the preceding claims, wherein the output means is a hardware interface.

**14.** A computer software program product, performing a method according to any of the preceding claims when run on a computing unit.

**15.** A computer system for categorizing sensorial input patterns, comprising:

- an accepting means for receiving at least one input pattern including sensorial information representing observations,
- a processing means employed to extract at least one feature pattern by transforming the input pattern by application of at least one feature extraction module which learns from the performed extraction process,
- the processing means employed to categorize the feature pattern into a category by application of at least one categorization module which learns from the performed categorization process,

- wherein the learning of the feature extraction module uses input from at least one categorization module such that the feature extraction module extracts a feature pattern discriminating the categories obtained by the categorization module, and

- a storage storing a category derived from the categorization process with features of the input pattern, and
- an output means for returning category information for the input pattern.

**16.** The system according to claim 15, wherein the learning of the feature extraction module includes training.

**17.** The system according to claim 15 or 16, wherein the training of the feature extraction module uses training samples generated by the at least one categorization module.

**18.** The system according to any one of the claims 15 to 17, wherein the training of the feature extraction module uses training samples selected based on information derived from the at least one categorization module.

**19.** The system according to any one of the claims 15 to 18, wherein the feature extraction module and the categorization module learn incrementally.

**20.** The system according to any one of the claims 15 to 19, wherein the learning of a feature extraction module either relies on at least one of a maximization of mutual information, a discriminant analysis, a principle component analysis, and an independent component analysis.

**21.** The system according to any one of the claims 15 to 20, wherein the categorization module is implemented by an artificial neural network.

22. The system according to claim 21, wherein the artificial neural network is a normalized Gaussian network.

23. The system according to claim 21 or 22, wherein the normalized Gaussian network is an adaptive normalized Gaussian network.

24. The system according to any one of the claims 15 to 23, wherein the accepting means for accepting an input pattern is at least one of a sensor, a hardware interface and a software interface.

25. The system according to any one of the claims 15 to 24, wherein the processing means is a processor and/or a signal processing unit formed of hardware and/or software.

26. The system according to any one of the claims 15 to 25, wherein the processing means is adapted for parallel processing.

27. The system according to any one of the claims 15 to 26, wherein the output means is a hardware interface.

28. A robot, being provided with acoustical and/or visual sensor means a system according to any of claims 15 to 27.

29. An air, sea or land vehicle, being provided with acoustical and/or visual sensor means a system according to any of claims 15 to 27.

**Patentansprüche**

1. Verfahren zur Kategorisierung sensorischer Eingabemuster, mit den Schritten:

   - Empfangen von mindestens einem Eingabemuster, das Beobachtungen darstellende, sensorische Informationen umfasst, von einer Annahmeeinrichtung,
   - Extrahieren von mindestens einem Merkmalsmuster durch Umwandlung des Eingabemusters durch Anwendung von mindestens einem Merkmalsextraktionsmodul, welches von dem durchgefiihrten Extraktionsprozess lernt,
   - Kategorisieren des Merkmalsmusters in eine Kategorie durch Anwendung mindestens eines erlernbaren Kategorisierungsmoduls, welches von dem durchgeführten Kategorisierungsprozess lernt,

      - wobei das Lernen des Merkmalsextraktionsmoduls eine Eingabe aus mindestens einem Kategorisierungsmodul verwendet, auf deren Grundlage das Merkmalsextraktionsmodul ein Merkmalsmuster extrahiert, das die durch das Kategorisierungsmodul erhaltenen Kategorien unterscheidet, und
      - wobei die Extraktions- und Kategorisierungsprozesse in einer Verarbeitungseinrichtung durchgeführt werden,

      - Speichern einer aus dem Kategorisierungsprozess abgeleiteten Kategorie mit Merkmalen des Eingabemusters, und
      - Zurückführen der Kategorieinformationen für das Eingabemuster durch eine Ausgabeeinrichtung.

2. Verfahren gemäß Anspruch 1, wobei das Lernen des Merkmalsextraktionsmoduls ein Training umfasst.

3. Verfahren gemäß Anspruch 1 oder 2, wobei das Training des Merkmalsextraktionsmoduls von dem mindestens einen Kategorisierungsmodul erzeugte Trainingsmuster verwendet.

4. Verfahren gemäß einem der Ansprüche 1 bis 3, wobei das Training des Merkmalsextraktionsmoduls Trainingsmuster verwendet, welche aufgrund der von dem mindestens einen Kategorisierungsmodul abgeleiteten Informationen ausgewählt werden.

5. Verfahren gemäß einem der vorhergehenden Ansprüche, wobei das Merkmalsextraktionsmodul und das Kategorisierungsmodul schrittweise lernen.

6. Verfahren gemäß einem der vorhergehenden Ansprüche, wobei das Lernen eines Merkmalsextraktionsmoduls auf mindestens einer Maximierung von wechselseitigen Informationen, einer Unterscheidungsanalyse, einer Hauptkomponentenanalyse und/oder einer unabhängigen Komponentenanalyse beruhen.

7. Verfahren gemäß einem der vorhergehenden Ansprüche, wobei das Kategorisierungsmodul von einem künstlichen neuronalen Netzwerk ausgeführt wird.

8. Verfahren gemäß Anspruch 7, wobei das künstliche neuronale Netzwerk ein normiertes Gauß'sches Netzwerk ist.

9. Verfahren gemäß Anspruch 7 oder 8, wobei das normierte Gauß'sche Netzwerk ein adaptives, normiertes Gauß'sches Netzwerk ist.

10. Verfahren gemäß einem der vorhergehenden Ansprüche, wobei die Annahmeeinrichtung zur Annahme eines Eingabemusters aus einem Sensor und/oder einer Hardware-Schnittstelle besteht.

11. Verfahren gemäß einem der vorhergehenden Ansprüche, wobei die Verarbeitungseinrichtung aus einem Prozessor und/oder einer aus Hardware gebildeter Signalverarbeitungseinheit besteht.

12. Verfahren gemäß einem der vorhergehenden Ansprüche, wobei die Verarbeitungseinrichtung für eine parallele Verarbeitung geeignet ist.

13. Verfahren gemäß einem der vorhergehenden Ansprüche, wobei die Ausgabeeinrichtung aus einer Hardware-Schnittstelle besteht.

14. Computersoftwareprogramm-Produkt, das ein Verfahren gemäß einem der vorhergehenden Ansprüche durchführt, wenn es auf einer Computereinheit gestartet wird.

15. Computersystem zur Kategorisierung sensorischer Eingabemuster, mit:

   - einer Annahmeeinrichtung zur Aufnahme von mindestens einem Eingabemuster, das Beobachtungen darstellende, sensorische Informationen umfasst,
   - einer Verarbeitungseinrichtung, die zum Extrahieren von mindestens einem Merkmalsmuster durch Umwandlung des Eingabemusters durch Anwendung von mindestens einem Merkmalsextraktionsmodul eingesetzt ist, welches von dem durchgeführten Extraktionsprozess lernt,
   - der Verarbeitungseinrichtung, die zum Kategorisieren des Merkmalsmusters in eine Kategorie durch Anwendung von mindestens einem Kategorisierungsmodul eingesetzt ist, welches von dem durchgeführten Kategorisierungsprozess lernt,

      - wobei das Lernen des Merkmalsextraktionsmoduls eine Eingabe von mindestens einem Kategorisierungsmodul derart verwendet, dass das Merkmalsextraktionsmodul ein Merkmalsmuster extrahiert, welches die durch das Kategorisierungsmodul erhaltenen Kategorien unterscheidet, und

      - einer Speicherung, die eine aus dem Kategorisierungsprozess abgeleitete Kategorie mit Merkmalen des Eingabemusters speichert, sowie
   - einer Ausgabeeinrichtung zur Rückführung der Kategorieinformationen für das Eingabemuster.

16. System gemäß Anspruch 15, wobei das Lernen des Merkmalsextraktionsmoduls eine Training umfasst.

17. System gemäß Anspruch 15 oder 16, wobei die Training des Merkmalsextraktionsmoduls durch das mindestens eine Kategorisierungsmodul erzeugte Trainingsmuster verwendet.

18. System gemäß einem der Ansprüche 15 bis 17, wobei die Training des Merkmalsextraktionsmoduls Trainingsmuster verwendet, welche aufgrund von aus dem mindestens einen Kategorisierungsmodul abgeleiteten Informationen ausgewählt sind.

19. System gemäß einem der Ansprüche 15 bis 18, wobei das Merkmalsextraktionsmodul und das Kategorisierungsmodul schrittweise lernen.

**20.** System gemäß einem der Ansprüche 15 bis 19, wobei das Lernen eines Merkmalsextraktionsmoduls auf mindestens einer Maximierung wechselseitiger Informationen, einer Unterscheidungsanalyse, einer Hauptkomponentenanalyse und/oder einer unabhängigen Komponentenanalyse beruht.

**21.** System gemäß einem der Ansprüche 15 bis 20, wobei das Kategorisierungsmodul von einem künstlichen neuronalen Netzwerk ausgeführt wird.

**22.** System gemäß Anspruch 21, wobei das künstliche neuronale Netzwerk ein normiertes Gauß'sches Netzwerk ist.

**23.** System gemäß Anspruch 21 oder 22, wobei das normierte Gauß'sche Netzwerk ein adaptives normiertes Gauß'sches Netzwerk ist.

**24.** System gemäß einem der Ansprüche 15 bis 23, wobei die Annahmeeinrichtung zur Annahme eines Eingabemusters aus mindestens einem Sensor, einer Hardware-Schnittstelle und/oder einer Software-Schnittstelle besteht.

**25.** System gemäß einem der Ansprüche 15 bis 24, wobei die Verarbeitungseinrichtung aus einem Prozessor und/oder einer aus Hardware und/oder Software gebildeten Signalverarbeitungseinheit besteht.

**26.** System gemäß einem der Ansprüche 15 bis 25, wobei die Verarbeitungseinrichtung für eine parallele Verarbeitung geeignet ist.

**27.** System gemäß einem der Ansprüche 15 bis 26, wobei die Ausgabeeinrichtung eine Hardware-Schnittstelle darstellt.

**28.** Roboter, der mit akustischen und/oder optischen Sensoreinrichtungen eines Systems gemäß einem der Ansprüche 15 bis 17 ausgerüstet ist.

**29.** Luft- Wasser- oder Landfahrzeug, das mit akustischen oder optischen Sensoreinrichtungen eines Systems gemäß einem der Ansprüche 15 bis 27 ausgerüstet ist.

**Revendications**

**1.** Procédé de catégorisation de motifs d'entrée sensorielle, comprenant :

- la réception à partir d'un moyen d'acceptation d'au moins un motif d'entrée comprenant des informations sensorielles représentant des observations,
- l'extraction d'au moins un motif de caractéristique en transformant le motif d'entrée par l'application d'au moins un module d'extraction de caractéristique qui apprend à partir du processus d'extraction effectué,
- la catégorisation du motif de caractéristique en une catégorie par l'application d'au moins un module de catégorisation susceptible d'être appris qui apprend à partir du processus de catégorisation effectué,

- dans lequel l'apprentissage du module d'extraction de caractéristique utilise une entrée depuis au moins un module de catégorisation sur la base de laquelle le module d'extraction de caractéristique extrait un motif de caractéristique discriminant les catégories obtenues par le module de catégorisation, et
- dans lequel les processus d'extraction et de catégorisation sont effectués sur un moyen de traitement,

- le stockage d'une catégorie dérivée du processus de catégorisation avec des caractéristiques du motif d'entrée, et
- le retour d'informations de catégorie pour le motif d'entrée par un moyen de sortie.

**2.** Procédé selon la revendication 1, dans lequel l'apprentissage du module d'extraction de caractéristique comprend la formation.

**3.** Procédé selon la revendication 1 ou 2, dans lequel la formation du module d'extraction de caractéristique utilise des échantillons de formation générés par l'au moins un module de catégorisation.

**4.** Procédé selon l'une quelconque des revendications 1 à 3, dans lequel la formation du module d'extraction de caractéristique utilise des échantillons de formation sélectionnés sur la base d'informations dérivées de l'au moins un module de catégorisation.

**5.** Procédé selon l'une quelconque des revendications précédentes, dans lequel le module d'extraction de caractéristique et le module de catégorisation apprennent de manière incrémentielle.

**6.** Procédé selon l'une quelconque des revendications précédentes, dans lequel l'apprentissage d'un module d'extraction de caractéristique repose sur au moins l'une d'une maximisation d'informations mutuelles, une analyse discriminante, une analyse en composante principale et une analyse en composante indépendante.

**7.** Procédé selon l'une quelconque des revendications précédentes, dans lequel le module de catégorisation est mis en oeuvre par un réseau de neurone artificiel.

**8.** Procédé selon la revendication 7, dans lequel le réseau de neurone artificiel est un réseau gaussien normalisé.

**9.** Procédé selon la revendication 7 ou 8, dans lequel le réseau gaussien normalisé est un réseau gaussien normalisé adaptatif.

**10.** Procédé selon l'une quelconque des revendications précédentes, dans lequel le moyen d'acceptation pour accepter un motif d'entrée est un capteur et/ou une interface matérielle.

**11.** Procédé selon l'une quelconque des revendications précédentes, dans lequel le moyen de traitement est un processeur et/ou une unité de traitement de signal sous forme matérielle.

**12.** Procédé selon l'une quelconque des revendications précédentes, dans lequel le moyen de traitement est apte à effectuer un traitement parallèle.

**13.** Procédé selon l'une quelconque des revendications précédentes, dans lequel le moyen de sortie est une interface matérielle.

**14.** Produit de programme logiciel informatique, effectuant un procédé selon l'une quelconque des revendications précédentes lorsqu'il est exécuté sur une unité informatique.

**15.** Système informatique pour catégoriser des motifs d'entrée sensorielle, comprenant :

- un moyen d'acceptation pour recevoir au moins un motif d'entrée comprenant des informations sensorielles représentant des observations,
- un moyen de traitement employé pour extraire au moins un motif de caractéristique en transformant le motif d'entrée par l'application d'au moins un module d'extraction de caractéristique qui apprend à partir du processus d'extraction effectué,
- le moyen de traitement employé pour catégoriser le motif de caractéristique en une catégorie par l'application d'au moins un module de catégorisation qui apprend à partir du processus de catégorisation effectué,

- dans lequel l'apprentissage du module d'extraction de caractéristique utilise une entrée depuis au moins un module de catégorisation de sorte que le module d'extraction de caractéristique extrait un motif de caractéristique discriminant les catégories obtenues par le module de catégorisation, et

- un stockage stockant une catégorie dérivée du processus de catégorisation avec des caractéristiques du motif d'entrée, et
- un moyen de sortie pour retourner des informations de catégorie pour le motif d'entrée.

**16.** Système selon la revendication 15, dans lequel l'apprentissage du module d'extraction de caractéristique comprend la formation.

**17.** Système selon la revendication 15 ou 16, dans lequel la formation du module d'extraction de caractéristique utilise des échantillons de formation générés par l'au moins un module de catégorisation.

**18.** Système selon l'une quelconque des revendications 15 à 17, dans lequel la formation du module d'extraction de caractéristique utilise des échantillons de formation sélectionnés sur la base d'informations dérivées de l'au moins un module de catégorisation.

19. Système selon l'une quelconque des revendications 15 à 18, dans lequel le module d'extraction de caractéristique et le module de catégorisation apprennent de manière incrémentielle.

20. Système selon l'une quelconque des revendications 15 à 19, dans lequel l'apprentissage d'un module d'extraction de caractéristique repose sur au moins l'une d'une maximisation d'informations mutuelles, une analyse discriminante, une analyse en composante principale et une analyse en composante indépendante.

21. Système selon l'une quelconque des revendications 15 à 20, dans lequel le module de catégorisation est mis en oeuvre par un réseau de neurone artificiel.

22. Système selon la revendication 21, dans lequel le réseau de neurone artificiel est un réseau gaussien normalisé.

23. Procédé selon la revendication 21 ou 22, dans lequel le réseau gaussien normalisé est un réseau gaussien normalisé adaptatif.

24. Système selon l'une quelconque des revendications 15 à 23, dans lequel le moyen d'acceptation pour accepter un motif d'entrée est au moins l'un d'un capteur, une interface matérielle et une interface logicielle.

25. Système selon l'une quelconque des revendications 15 à 24, dans lequel le moyen de traitement est un processeur et/ou une unité de traitement de signal sous forme matérielle et/ou logicielle.

26. Système selon l'une quelconque des revendications 15 à 25, dans lequel le moyen de traitement est apte à effectuer un traitement parallèle.

27. Système selon l'une quelconque des revendications 15 à 26, dans lequel le moyen de sortie est une interface matérielle.

28. Robot, pourvu d'un moyen de détection acoustique et/ou visuelle et d'un système selon l'une quelconque des revendications 15 à 27.

29. Véhicule aérien, marin ou terrestre, pourvu d'un moyen de détection acoustique et/ou visuelle et d'un système selon l'une quelconque des revendications 15 à 27.

Figure 1

Figure 2

Figure 3

Figure 4

Figure 5

**Figure 6**

**Figure 7**

**Figure 8**

Figure 9

Figure 10

Figure 11

Figure 12

---

**Algorithm 1** pruneLocalModels($\theta_{merge}$)

---

Calculate the similarity $U(\mathcal{M}_i, \mathcal{M}_j)$, $\forall \{\mathcal{M}_i, \mathcal{M}_j\} \in \mathcal{M}^2, i \neq j$

$\{a, b\} \leftarrow \arg\max_{\{i,j\}} U(\mathcal{M}_i, \mathcal{M}_j)$

**while** $U(\mathcal{M}_a, \mathcal{M}_b) > \theta_{merge}$ **do**

  Merge $\mathcal{M}_a$ and $\mathcal{M}_b$ to $\mathcal{M}_{new}$

  $\mathcal{M} \leftarrow (\mathcal{M} \setminus \{\mathcal{M}_a, \mathcal{M}_b\}) \cup \{\mathcal{M}_{new}\}$

  Update the similarity $U(\mathcal{M}_i, \mathcal{M}_j)$, $\forall \{\mathcal{M}_i, \mathcal{M}_j\} \in \mathcal{M}^2, i \neq j$

  $\{a, b\} \leftarrow \arg\max_{\{i,j\}} U(\mathcal{M}_i, \mathcal{M}_j)$

**end while**

---

Figure 12a

---

**Algorithm 2 NGnet**

---

Initialize $\mathcal{M} = \emptyset$

for all samples $(y_t, c_t)$ do

  if $\mathcal{M} = \emptyset$ then

    assignNewModel$(y_t, c_t)$

  else

    {Network Training}
    calculate the network output $\tilde{c}(y_t)$ and error $c_t$
    calculate the posterior $p(y_t, c_t|i)$ $\forall i$
    if $(\max_i p(y_t, c_t|i, \Theta(t-1)) < \theta_{assign_1})$ or $(c_t(\Theta(t-1)) > \theta_{assign_2})$ then
      assignNewModel$(y_t, c_t)$
    else
      train the NGnet via sequential EM learning
    end if

    {Local Model Manipulation}
    for all $i \in \{j||\Gamma_i| > \theta_{split}\}$ do
      splitModel$(\mathcal{M}_i)$
    end for
    for all $i \in \{j|\rho_j < \theta_{remove}\}$ do
      removeModel$(\mathcal{M}_i)$
    end for
    pruneLocalModels$(\theta_{merge})$

  end if

end for

---

Figure 12b

(a)　　　　　　　　(b)　　　　　　　　(c)

Figure 13

EP 2 345 984 B1

Figure 14

(a)          (b)          (c)          (d)

Figure 15

---

**Algorithm 3** Algorithm for word meaning acquisition

---

Initialize the feature extraction matrix to be the identity matrix
Initialize an empty NGnet
**for all** input samples **do**
  Project the sample to the feature space
  Train the NGnet on the new sample
  Generate a training set of positive and negative examples using the generative pathway of the system
  Train the feature extraction (MRMI + PCA)
  Adapt the NGnet to the changed feature space
**end for**

---

Figure 15a

**Figure 16**

**Figure 17**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.K. Jain et al.** Statistical Pattern Recognition: A Review. *IEEE Transactions on Pattern Analysis and Machine Intelligence,* 2000, vol. 22 (1), 4-37
- Adaptive Resonance Theory. **G.A. Carpenter ; S. Grossberg.** The Handbook of Brain Theory and Neural Networks. MIT Press, 2003
- A Vector Quantization Approach for Life-Long Learning of Categories. **S. Kirstein et al.** Advances in Neuro-Information Processing. Springer, 2009, vol. LNCS 550, 805-812
- **S. Ozawa et al.** Incremental Learning of Feature Space and Classifier for Face Recognition. *Neural Networks,* 2005, vol. 18 (5-6), 575-584
- **Kirstein.** *an integrated system for incremental learning of multiple visual categories*
- **C.M. Bishop.** Neural Networks for Pattern Recognition. Oxford University Press, 1995
- **S. Haykin.** Neural Networks: a comprehensive foundation. Prentice-Hall, 1999
- **K.E. Hild et al.** Feature Extraction Using Information-Theoretic Learning. *IEEE Transactions of Pattern Analysis and Machine Intelligence,* 2006, vol. 28 (9), 1385-1392
- **J. Moody ; C. J. Darken.** Fast learning in networks of locally-tuned processing units. *Neural Computation,* 1989, vol. 1 (2), 281-294

- **K.E. Hild et al.** Feature Extraction using Information-Theoretic Learning. *IEEE Transactions on Pattern Analysis and Machine Intelligence,* 2006, vol. 29 (9), 1385-1392
- **R.A. Jacobs et al.** Adaptive Mixtures of Local Experts. *Neural Computation,* 1991, vol. 3, 79-87
- **L. Xu.** RBF Nets, Mixture Experts, and Bayesian Ying-Yang Learning. *Neurocomputing,* 1998, vol. 19, 223-257
- **Schaal ; Atkinson.** Constructive incremental learning from only local information. *Neural Computation,* 1998, vol. 10 (8), 2047-2084
- **Sato ; Ishii.** Online EM Algorithm for the Normalized Gaussian Network. *Neural Computation,* 2000, vol. 12 (2), 407-432
- **Davis ; Dhillon.** Differential entropic clustering of multivariate Gaussians. *Advances in Neural Information Processing Systems,* 2006, 19
- **Myrvoll ; Soong.** On divergence based clustering of normal distributions and its application to HMM adaptation. *Proc. of the EUROSPEECH,* 2003
- **Xu.** RBF Nets, Mixture Experts, and Bayesian Ying-Yang Learning. *Neurocomputing,* 1998, vol. 19, 223-257